(19) **Europäisches Patentamt / European Patent Office / Office européen des brevets**

(11) **EP 4 737 002 A1**

(12) # EUROPEAN PATENT APPLICATION
published in accordance with Art. 153(4) EPC

(43) Date of publication:
06.05.2026 Bulletin 2026/19

(21) Application number: 24832335.4

(22) Date of filing: 13.06.2024

(51) International Patent Classification (IPC):
$B01J\ 23/89^{(2006.01)}$  $B01J\ 23/63^{(2006.01)}$
$B01J\ 37/02^{(2006.01)}$  $B01J\ 37/03^{(2006.01)}$
$B01J\ 37/08^{(2006.01)}$  $C01B\ 3/04^{(2026.01)}$

(52) Cooperative Patent Classification (CPC):
B01J 23/63; B01J 23/89; B01J 37/02; B01J 37/03;
B01J 37/08; C01B 3/04; Y02E 60/36

(86) International application number:
PCT/KR2024/008158

(87) International publication number:
WO 2025/005555 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.06.2023 KR 20230082646
31.01.2024 KR 20240015043
30.05.2024 KR 20240070892

(71) Applicants:
• POSCO Holdings Inc.
Pohang-si, Gyeongsangbuk-do 37859 (KR)

• POSTECH Research and Business Development Foundation
Pohang-si, Gyeongsangbuk-do 37673 (KR)

(72) Inventors:
• YOON, Chang Won
Pohang-si Gyeongsangbuk-do 37673 (KR)
• KIM, Joon Seong
Pohang-si Gyeongsangbuk-do 37673 (KR)
• HAN, Seungmok
Pohang-si Gyeongsangbuk-do 37673 (KR)

(74) Representative: Pfenning, Meinig & Partner mbB
Patent- und Rechtsanwälte
Theresienhöhe 11a
80339 München (DE)

(54) **AMMONIA PARTIAL OXIDATION-BASED HYDROGEN EXTRACTION CATALYST AND HYDROGEN EXTRACTION METHOD**

(57) Disclosed are an ammonia partial oxidation-based hydrogen extraction catalyst, a manufacturing method therefor, and a hydrogen extraction method using the catalyst. The ammonia partial oxidation-based hydrogen extraction catalyst comprises: a support; and ruthenium (Ru) loaded on the support. The hydrogen extraction method using the catalyst allows the temperature inside a reactor to be maintained at a high temperature without an external heat source and has a long reaction time, thereby solving the existing problem of thermal efficiency reduction and enabling a high ammonia conversion rate to be obtained.

**EP 4 737 002 A1**

[FIG. 1]

```
                    ┌─────────────┐
                    │    Start    │
                    └──────┬──────┘
                           │
                           ▼
┌──────────────────────────────────────────┐
│ Prepare precursor solution including one or│
│  more selected from group consisting of    │ ∼ Step a
│  lanthanide metal precursors and transition │
│ metal precursors, cerium precursor, and water│
└──────────────────────┬─────────────────────┘
                       │
                       ▼
┌──────────────────────────────────────────┐
│ coprecipitate precursor of precursor solution│
│  to synthesize coprecipitate including one or│
│   more selected from group consisting of     │ ∼ Step b
│   lanthanide metals and transition metals and│
│                  cerium                       │
└──────────────────────┬─────────────────────┘
                       │
                       ▼
┌──────────────────────────────────────────┐
│ Heat treat coprecipitate to prepare support │ ∼ Step c
└──────────────────────┬─────────────────────┘
                       │
                       ▼
┌──────────────────────────────────────────┐
│  Stirring support solution including support,│
│    ruthenium precursor, and water to         │ ∼ Step d
│       manufacture catalyst including         │
│         ruthenium-loaded support             │
└──────────────────────┬─────────────────────┘
                       │
                       ▼
                ┌─────────────┐
                │     End     │
                └─────────────┘
```

# EP 4 737 002 A1

## Description

### Technical Field

The present disclosure relates to an ammonia partial oxidation-based hydrogen extraction catalyst, a manufacturing method therefor, and a hydrogen extraction method using the catalyst.

### Background Art

Due to the problems of depletion and environmental pollution caused by indiscreet use of fossil fuels, various studies are being conducted on the production and utilization of renewable alternative energy which may replace fossil fuels, among them, in particular, hydrogen. Among various production methods of hydrogen, a method of extracting hydrogen by decomposing ammonia has benefits such as a high hydrogen storage capacity relative to weight (about 17.6 wt% $H_2$), high energy density to volume (about 12.8 $GJ/m^3$, 120 $Kg-H_2/m^3$), ease of liquefaction (0.8 MPa, 20°C or 0.1 MPa, - 33°C), and no $CO_2$ emissions after decomposition as a hydrogen carrier, of ammonia. For reference, an ammonia decomposition reaction is as follows:

$$[\text{Reaction Formula 1}] \qquad NH_3(g) \rightarrow 0.5N_2(g) + 1.5H_2(g) \ (H = +46 \ KJ/mol)$$

However, the reaction is an endothermic reaction, of which the activation energy is also about $\Delta H=+117$ KJ/mol, and thus, an external heat supply is essential. Therefore, in order for a temperature inside a reactor to be adjusted to 500°C or higher, heat of combustion of carbon-based fuels such as natural gas is used, and in this process, the thermal efficiency of the entire system is decreased due to the use of the carbon-based fuel for maintaining the temperature of 500°C or higher.

Accordingly, development of a new ammonia decomposition hydrogen extraction system which does not require an external heat source, has a long reaction time, and may maintain the temperature inside a reactor at a high level, and a catalyst for realizing the system, appears to be important.

### Summary of Invention

### Technical Problem

An aspect of the present disclosure is to provide an ammonia partial oxidation-based hydrogen extraction catalyst and system which do not require an external heat source.

Another aspect of the present disclosure is to provide an ammonia partial oxidation-based hydrogen extraction catalyst and system which have a long reaction time and maintain the temperature inside a reactor high to solve a thermal efficiency reduction problem.

Another aspect of the present disclosure is to provide a manufacturing method for the ammonia partial oxidation-based hydrogen extraction catalyst.

### Solution to Problem

According to an aspect of the present disclosure, a catalyst includes: a support including a compound represented by the following Chemical Formula 1; and ruthenium (Ru) loaded on the support:

$$[\text{Chemical Formula 1}] \qquad Ce_{1-x}M_xO_{2-\delta}$$

wherein x satisfies $0<x<1$, M is a lanthanide metal or a transition metal, and $\delta$ satisfies $0<\delta\leq0.5$.

In addition, the lanthanide metal may include one or more selected from the group consisting of lanthanum (La), samarium (Sm), ytterbium (Yb), gadolinium (Gd), and lutetium (Lu).

In addition, the lanthanide metal may include lanthanum (La).

In addition, the lanthanide metal may include lanthanum (La), wherein x satisfies $0.05\leq x\leq0.8$, preferably $0.1\leq x\leq0.7$, and more preferably $0.3\leq x\leq0.6$.

In addition, the transition metal may include one or more selected from the group consisting of zirconium (Zr), yttrium (Y), iron (Fe), copper (Cu), nickel (Ni), cobalt (Co), and osmium (Os).

In addition, the transition metal may include zirconium (Zr).

In addition, the transition metal may include zirconium (Zr), and x may satisfy $0.05\leq x\leq0.5$, preferably $0.1\leq x\leq0.4$

In addition, the catalyst may include 1 to 3 wt%, preferably 1.3 to 2.0 wt% of the ruthenium. Herein, less than 1 wt% of the ruthenium is not preferred, since the ammonia partial oxidation-based hydrogen extraction may not occur, and more than 3 wt% of ruthenium is not preferred, since ammonia decomposition efficiency is low.

In addition, the catalyst may be for extracting hydrogen by decomposing ammonia.

According to another aspect of the present disclosure, a manufacturing method for a catalyst includes: (a) preparing a precursor solution including one or more selected from the group consisting of lanthanide metal precursors and transition metal precursors, a cerium precursor, and water; (b) coprecipitating the precursor of the precursor solution to synthesize a coprecipitate including one or more selected from the group consisting of lanthanide metals and transition metals and cerium; (c) heat treating the coprecipitate to prepare a support; and (d) stirring a support solution including the support, the ruthenium precursor, and water to manufacture a catalyst including a ruthenium-loaded support.

In addition, the catalyst may include a support including a compound represented by the following Chemical Formula 1 and ruthenium (Ru) loaded on the support:

[Chemical Formula 1] $\quad Ce_{1-x}M_xO_{2-\delta}$

wherein x satisfies $0<x<1$, M is a lanthanide metal or a transition metal, and $\delta$ satisfies $0<\delta\leq0.5$.

In addition, a pH of the precursor solution of (a) may be 8 to 11, preferably 9 to 10.

In addition, the lanthanide metal precursor may include a lanthanum nitrate hexahydrate, the transition metal precursor may include a zirconium nitrate hexahydrate, and the cerium precursor may include a cerium nitrate hexahydrate.

In addition, the heat treatment of (c) may be performed in the air.

In addition, the heat treatment of (c) may be performed at 400 to 600°C, preferably 450 to 550°C.

According to another aspect of the present disclosure, a hydrogen extraction method includes: (1) extracting hydrogen by partially oxidizing ammonia in the presence of the catalyst and oxygen.

In addition, the partial oxidation reaction may include an ammonia decomposition reaction and an ammonia oxidation reaction.

In addition, the partial oxidation reaction may be performed by a reaction of the following Reaction Formula 1:

[Reaction Formula 1: Ammonia partial oxidation reaction (heat absorption through injection of small amount of oxygen → conversion into exothermic reaction)] $\quad NH_3(g) + xO_2(g) \rightarrow 0.5N_2(g) + 2xH_2O(g) + (1.5-2x)$ $H_2(g)$ H = 46-484x kJ mol$^{-1}$

wherein x satisfies $0<x<0.75$, preferably $0.15<x<0.65$.

The reaction of Reaction Formula 1 may be performed using heat of reaction by an exothermic reaction of one or more selected from the group consisting of the following Reaction Formula 2 and Reaction Formula 3 and some external heat sources:

[Reaction Formula 2: [ammonia thermal decomposition reaction (endothermic)] $\quad NH_3(g) \rightarrow$ $0.5N_2(g) + 1.5H_2(g)$ $\triangle H = 45.9$ kJ mol$^{-1}$

[Reaction Formula 3: complete ammonia combustion (reaction in which ammonia is completely combusted without producing hydrogen to form only nitrogen and water vapor)] $\quad NH_3(g) + 0.75O_2(g) \rightarrow$ $0.5N_2(g) + 1.5H_2O(g)$ $\triangle H = -317$ kJ mol$^{-1}$

In addition, the endothermic reaction of Reaction Formula 2 may be performed using heat of reaction by one or more exothermic reactions selected from the group consisting of Reaction Formula 3.

In addition, step (1) may be performed without supplying heat from outside or using some external heat sources.

In addition, in step (1), a gas hour space velocity (GHSV, L/(g$_{cat}$-h)) ratio between ammonia and oxygen may be 2:1 to 6:1, preferably 3:1 to 5:1, and more preferably 3.5:1 to 4.5:1. Herein, in step (1), when the Gas Hour Space Velocity (GHSV, L/(g$_{cat}$-h)) ratio between ammonia and oxygen is less than 6:1 (ex. 6.5:1 or 7:1), an ammonia endothermic reaction occurs, which make it difficult to supply sufficient heat, and when the ratio is more than 2:1 (ex. 2.5:1, 1:1, or the like), the reaction is close to a complete combustion reaction due to injection of excess oxygen, and as the reaction is close to a combustion reaction, a hydrogen production amount is decreased, which is not preferred.

In addition, step (1) may be performed at 450 to 700°C, preferably 500 to 650°C.

Advantageous Effects of Invention

According to an aspect of the present disclosure, an ammonia partial oxidation-based hydrogen extraction system which does not require an external heat source may be provided.

According to another aspect of the present disclosure, an ammonia partial oxidation-based hydrogen extraction system which has a long reaction time and maintains the temperature inside a reactor high to solve a thermal efficiency reduction problem may be provided.

According to another aspect of the present disclosure, an ammonia partial oxidation-based hydrogen extraction catalyst having excellent performance which is to be used in the system, and a manufacturing method therefor may be provided.

Brief Description of Drawings

Since these drawings are for reference in describing exemplary embodiments of the present disclosure, the technical spirit of the present disclosure should not be interpreted as being limited to the accompanying drawings.

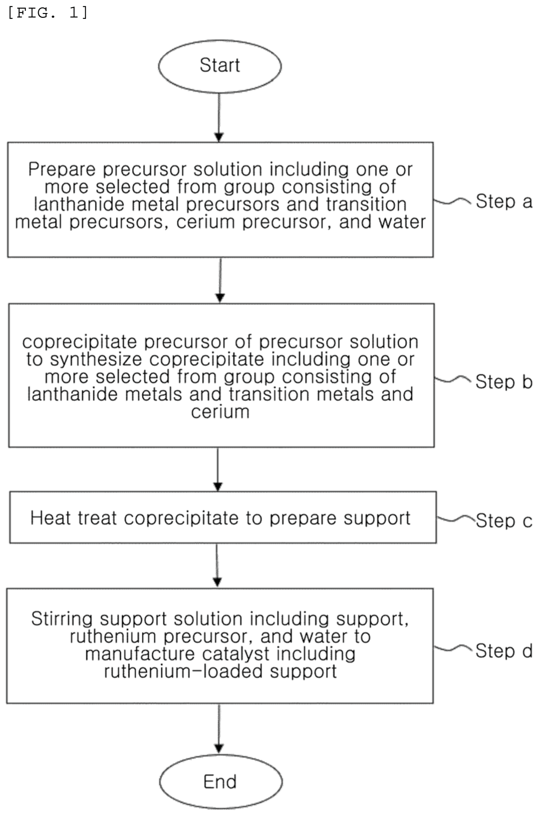

FIG. 1 is a schematic diagram showing a manufacturing method for a support including a lanthanide metal or a transition metal according to an exemplary embodiment of the present disclosure and a catalyst including ruthenium loaded on the support.

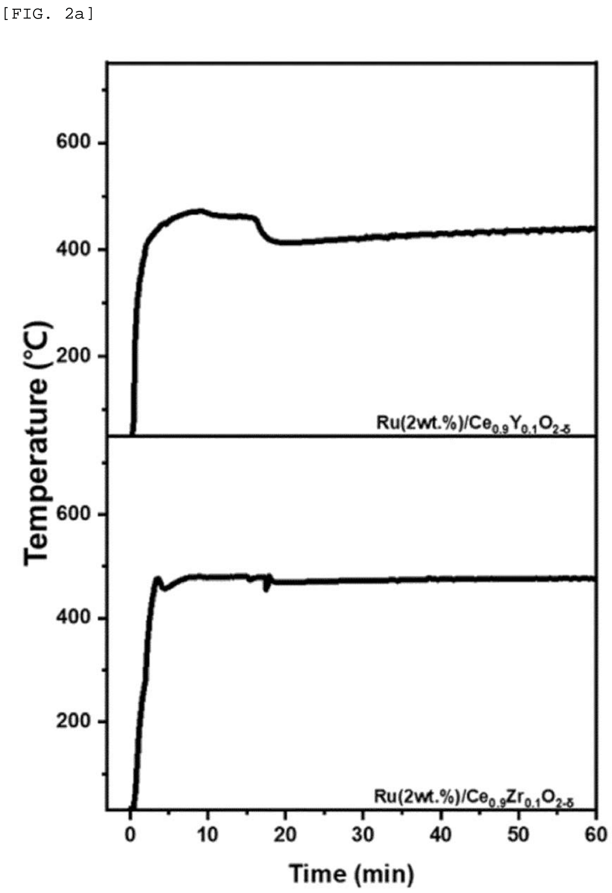

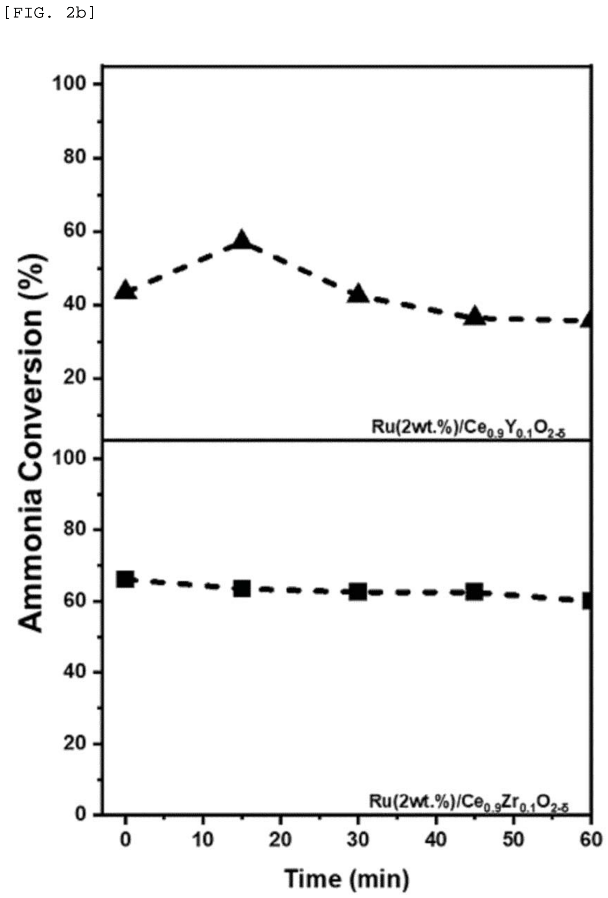

FIG. 2A is a graph showing reaction temperature ranges when a $Ru/Ce_{0.9}Zr_{0.1}O_{2-\delta}$ catalyst according to Example 2-3 and a $Ru/Ce_{0.9}Y_{0.1}O_{2-\delta}$ catalyst according to Example 4-1 are used, and FIG. 2B is a graph showing ammonia conversion rates and hydrogen production amounts using the $Ru/Ce_{0.9}Zr_{0.1}O_{2-\delta}$ catalyst according to Example 2-3 and the $Ru/Ce_{0.9}Y_{0.1}O_{2-\delta}$ catalyst according to Example 4-1.

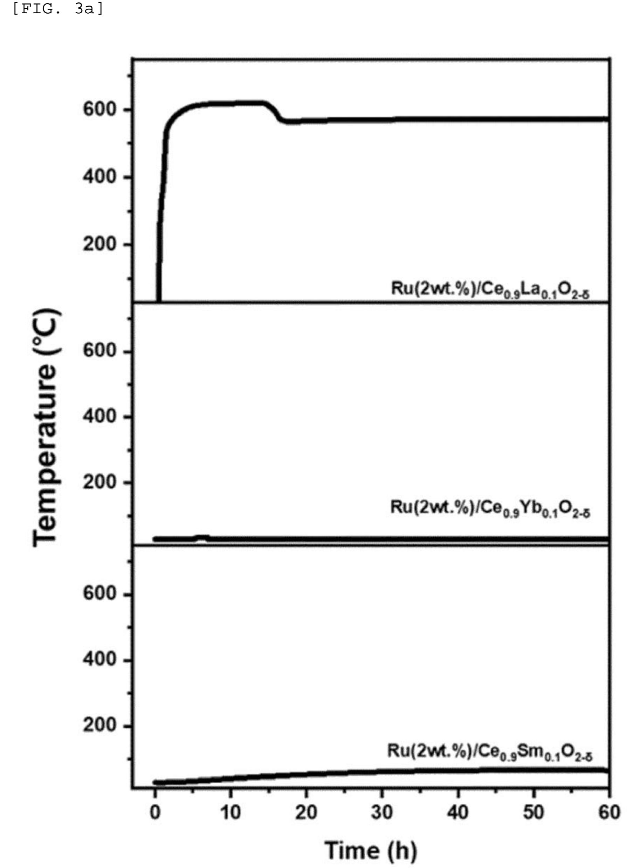

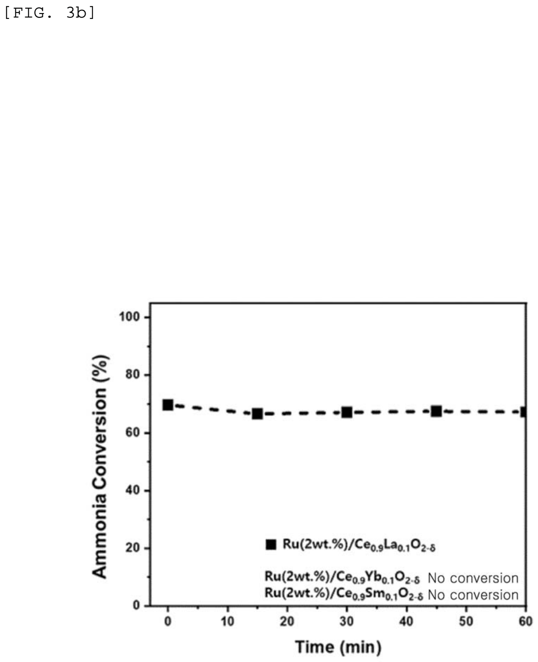

FIG. 3A is a graph showing reaction temperature ranges when a $Ru/Ce_{0.9}La_{0.1}O_{2-\delta}$ catalyst according to Example 1-4, a $Ru/Ce_{0.9}Sm_{0.1}O_{2-\delta}$ catalyst according to Example 3-1, and a $Ru/Ce_{0.9}Yb_{0.1}O_{2-\delta}$ catalyst according to Example 3-2, and FIG. 3B is a graph showing ammonia conversion rates and hydrogen production amounts using the $Ru/Ce_{0.9}La_{0.1}O_{2-\delta}$ catalyst according to Example 1-4, the $Ru/Ce_{0.9}Sm_{0.1}O_{2-\delta}$ catalyst according to Example 3-1, and the $Ru/Ce_{0.9}Yb_{0.1}O_{2-\delta}$ catalyst according to Example 3-2.

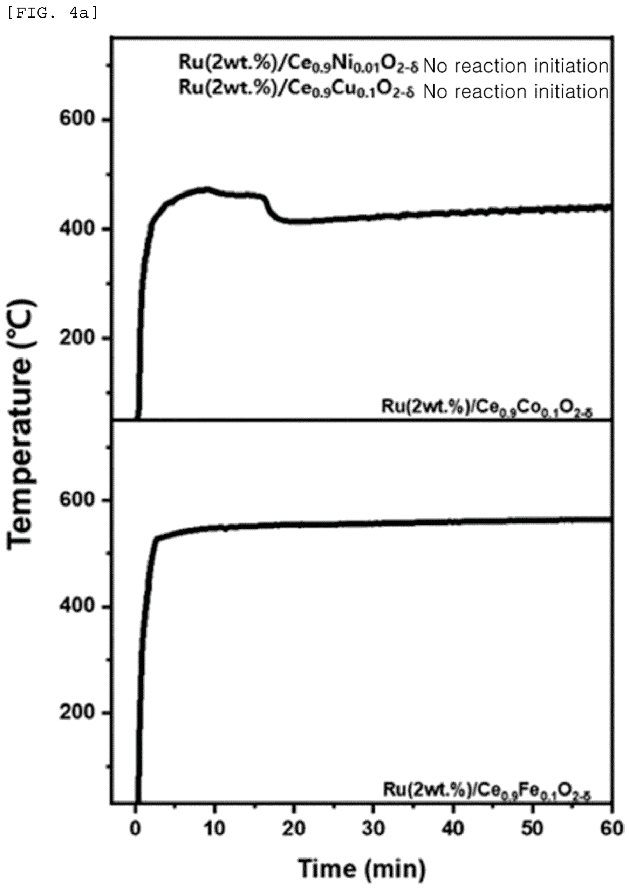

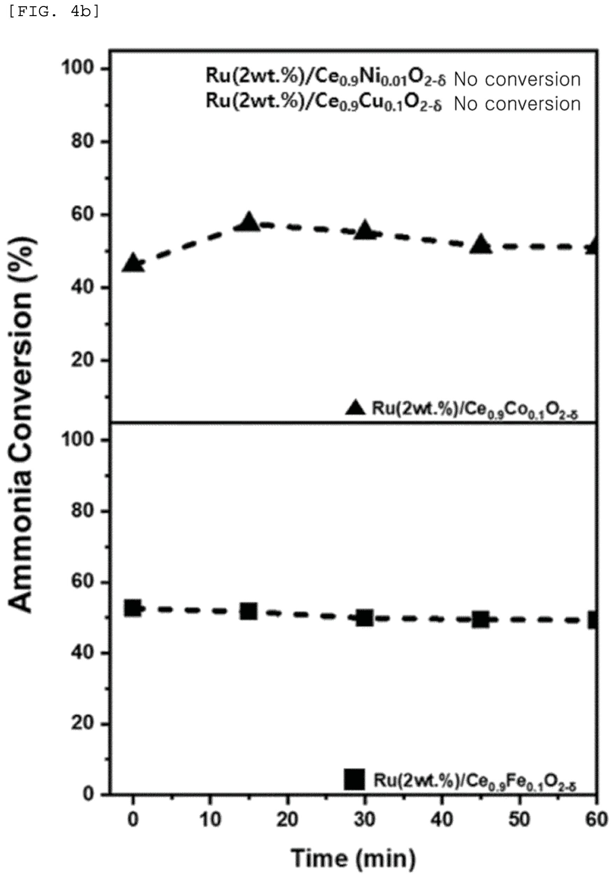

FIG. 4A is a graph showing reaction temperature ranges when a $Ru/Ce_{0.9}Fe_{0.1}O_{2-\delta}$ catalyst according to Example 4-2, a $Ru/Ce_{0.9}Cu_{0.1}O_{2-\delta}$ catalyst according to Example 4-3, a $Ru/Ce_{0.9}Ni_{0.1}O_{2-\delta}$ catalyst according to Example 4-4, and a $Ru/Ce_{0.9}Co_{0.1}O_{2-\delta}$ catalyst according to Example 4-5, and FIG. 4B is a graph showing ammonia conversion rates and hydrogen production amounts using the $Ru/Ce_{0.9}Fe_{0.1}O_{2-\delta}$ catalyst according to Example 4-2, the $Ru/Ce_{0.9}Cu_{0.1}O_{2-\delta}$ catalyst according to Example 4-3, the $Ru/Ce_{0.9}Ni_{0.1}O_{2-\delta}$ catalyst according to Example 4-4, and the $Ru/Ce_{0.9}Co_{0.1}O_{2-\delta}$ catalyst according to Example 4-5.

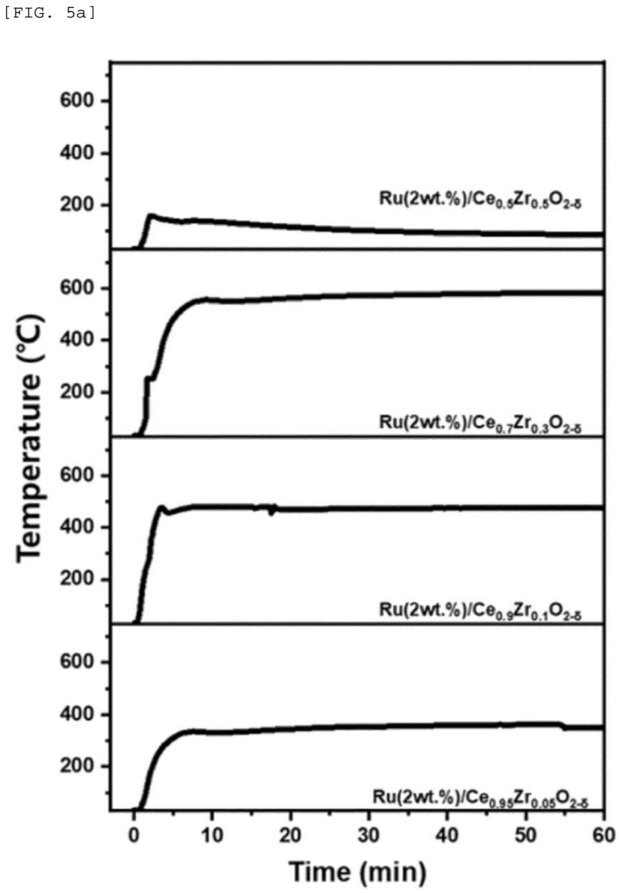

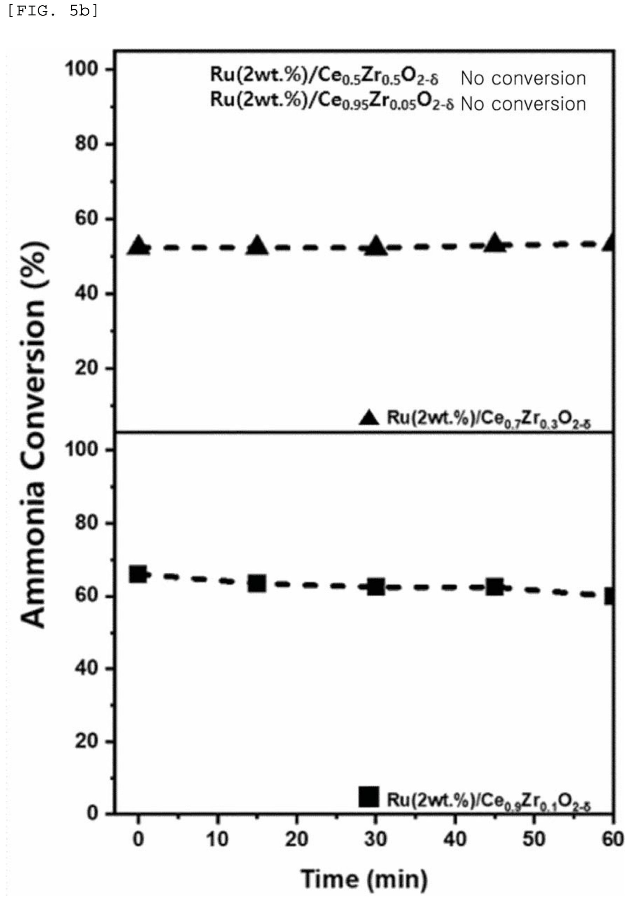

FIG. 5A is a graph showing reaction temperatures by an x value using zirconium-containing $Ru/Ce_{1-x}Zr_xO_{2-\delta}$ catalysts according to Examples 2-1 to 2-4, and FIG. 5B is a graph showing ammonia conversion rate data and hydrogen production amounts by the x value using the zirconium-containing $Ru/Ce_{1-x}Zr_xO_{2-\delta}$ catalysts according to Examples 2-1 to 2-4.

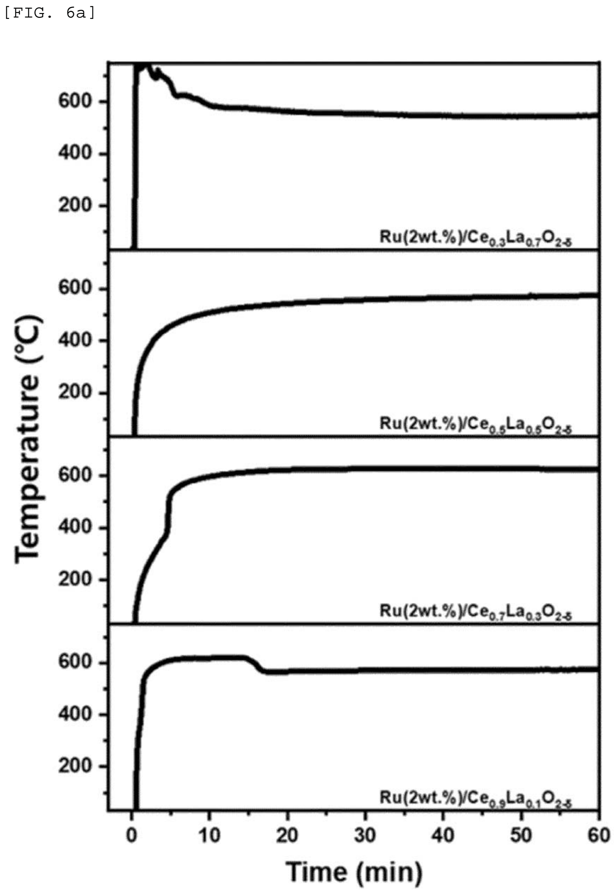

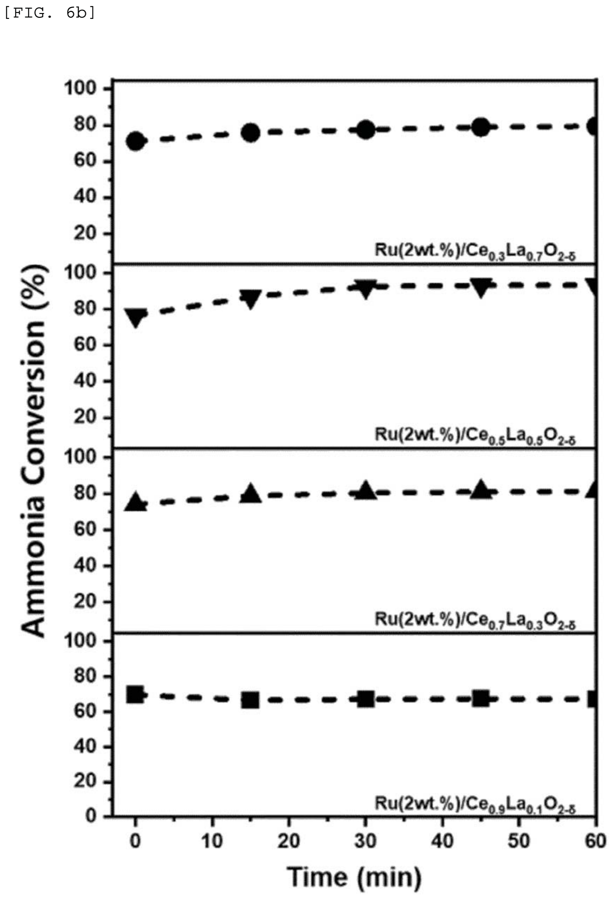

FIG. 6A is a graph showing reaction temperatures by an x value using lanthanum-containing $Ru/Ce_{1-x}La_xO_{2-\delta}$ catalysts according to Examples 1-1 to 1-5 and Comparative Example 1-1, and FIG. 6B is a graph showing ammonia conversion rate data and hydrogen production amounts by the x value using the lanthanum-containing $Ru/Ce_{1-x}La_xO_{2-\delta}$ catalysts according to Examples 1-1 to 1-5 and Comparative Example 1-1.

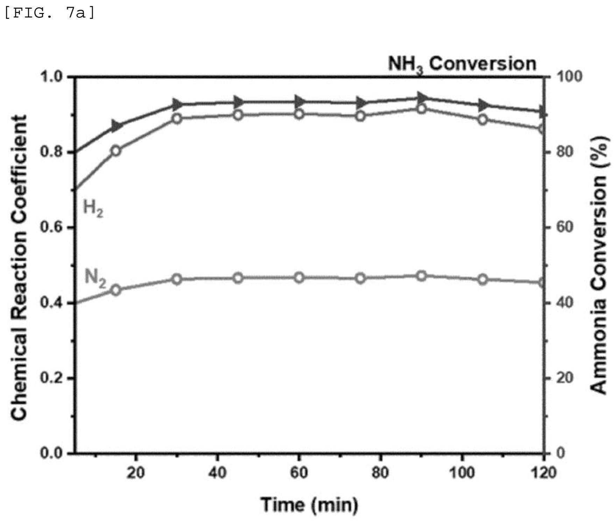

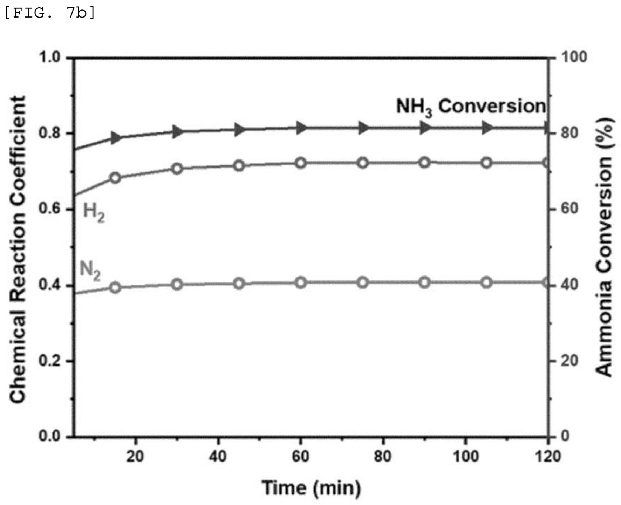

FIG. 7A is a graph showing an ammonia conversion rate and a chemical formula coefficient data by analyzing a detailed gas concentration of the $Ru/Ce_{0.5}La_{0.5}O_{2-\delta}$ catalyst according to Example 1-2, and FIG. 7B is a graph showing the ammonia conversion rate and the chemical formula coefficient data by analyzing a detailed gas concentration of the $Ru/Ce_{0.7}La_{0.3}O_{2-\delta}$ catalyst according to Example 1-3.

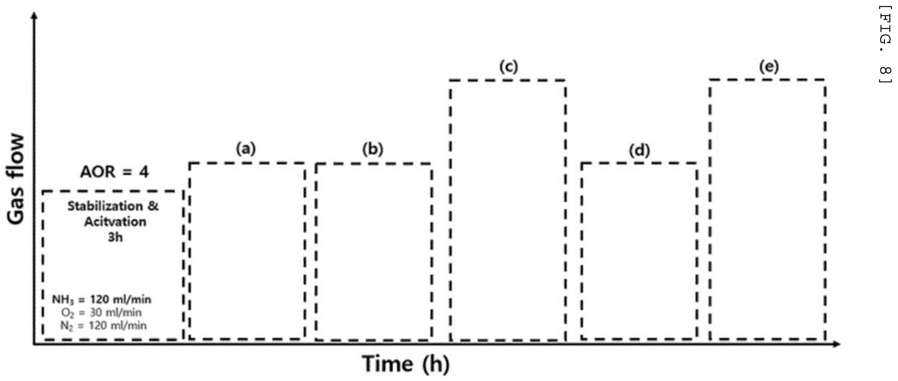

FIG. 8 is a graph showing an evaluation protocol (AOR: $NH_3/O_2$ ratio, varied from 4 to 6) of $Ru(3\ wt\%)/Ce_{1-x}La_xO_{2-\delta}$ catalysts of Examples 5-1 to 5-4 and Comparative Examples 2-1 and 2-2, and the reaction was performed for 2 hours and 30 minutes for each condition.

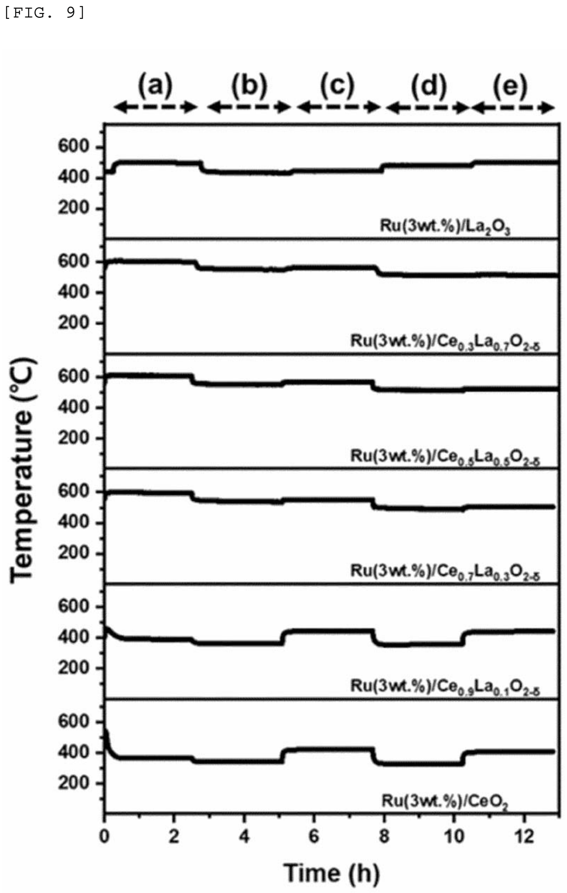

FIG. 9 is a graph showing temperature data by section of the $Ru(3\ wt\%)/Ce_{1-x}La_xO_{2-\delta}$ catalysts according to Examples 5-1 to 5-4 and Comparative Examples 2-1 and 2-2.

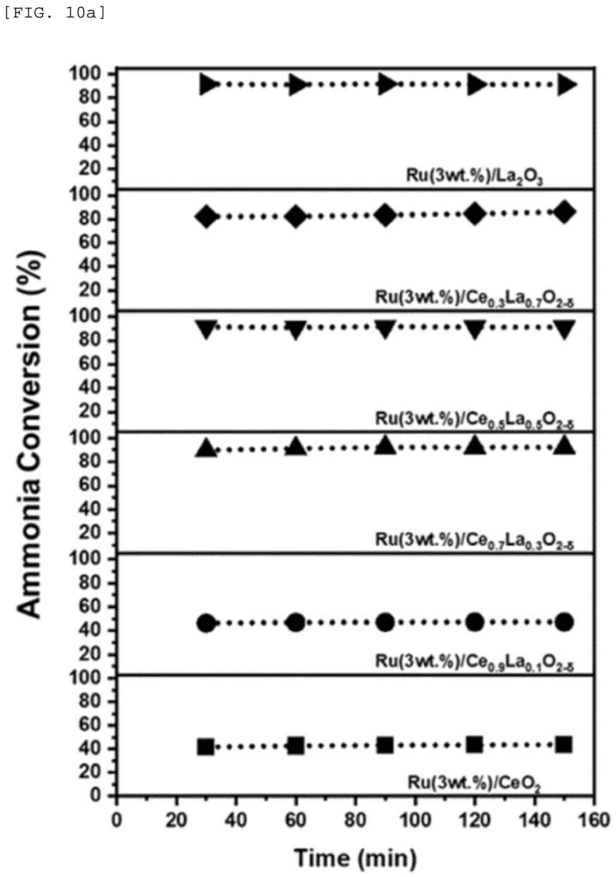

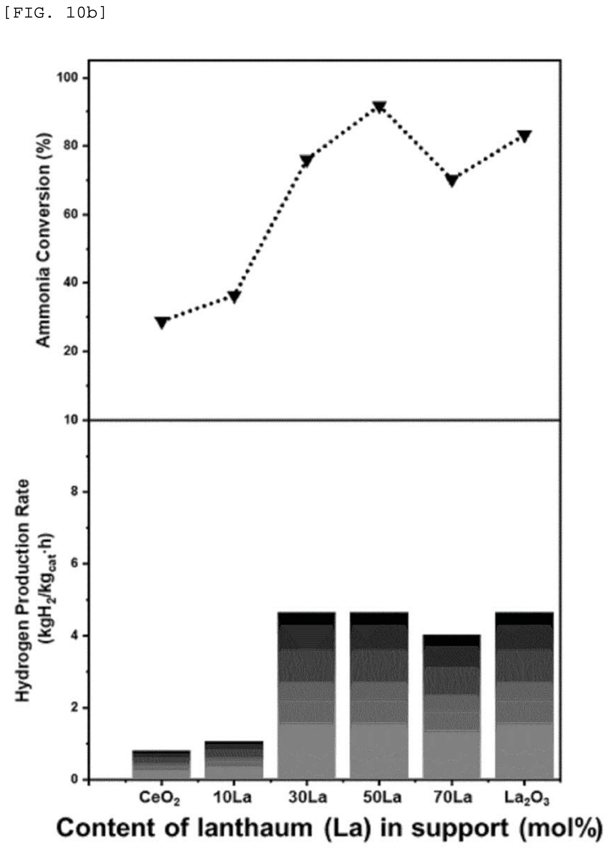

FIG. 10A is a graph showing ammonia conversion rate data over time when an AOR ($NH_3/O_2$ ratio) of the $Ru(3\ wt\%)/Ce_{1-x}La_xO_{2-\delta}$ catalysts according to Examples 5-1 to 5-4 and Comparative Examples 2-1 and 2-2 was 4 to 5, and FIG. 10B is a graph showing ammonia conversion rate data depending on a lanthanum (La) content when the AOR ($NH_3/O_2$ ratio) of the $Ru(3\ wt\%)/Ce_{1-x}La_xO_{2-\delta}$ catalysts according to Examples 5-1 to 5-4 and Comparative Examples 2-1 and 2-2 was 4 to 5.

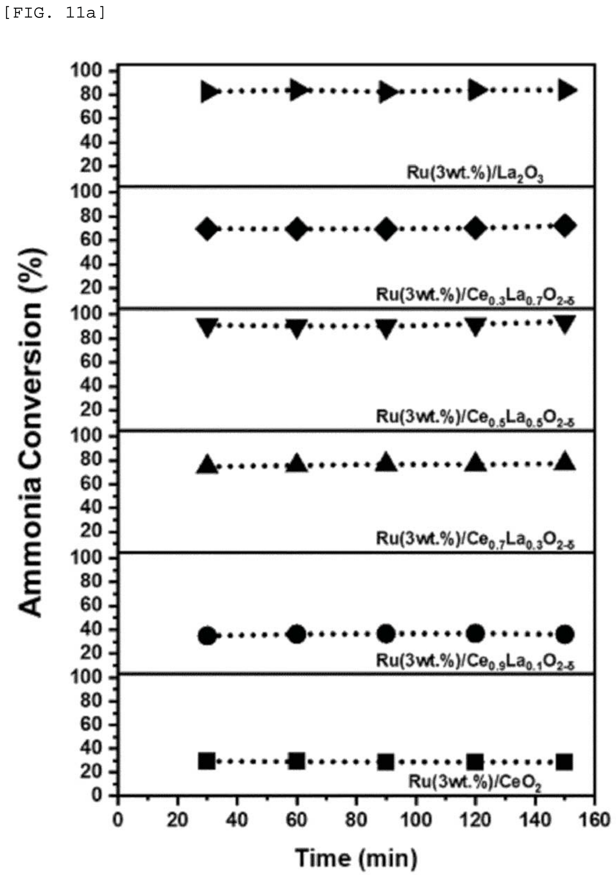

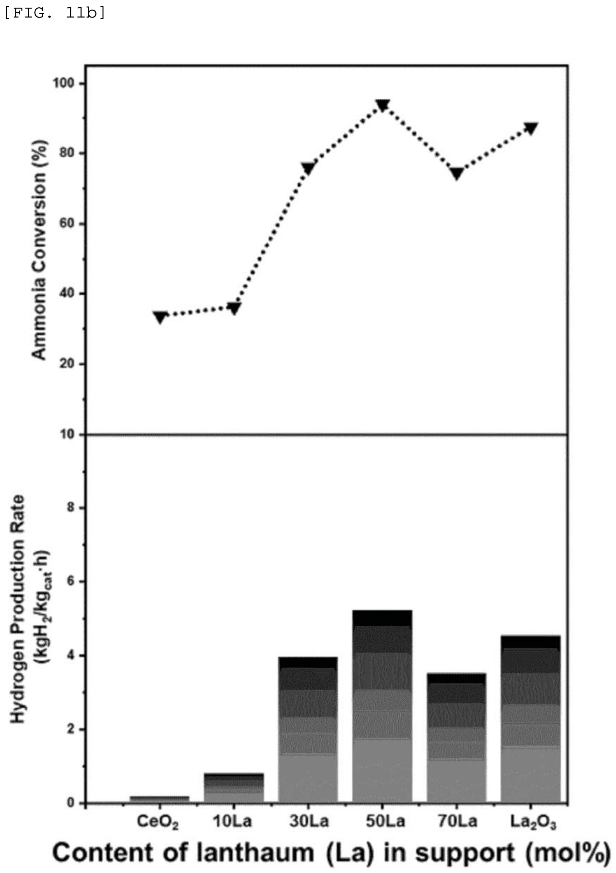

FIG. 11A is a graph showing ammonia conversion rate data over time when the AOR ($NH_3/O_2$ ratio) of the $Ru(3\ wt\%)/Ce_{1-x}La_xO_{2-\delta}$ catalysts according to Examples 5-1 to 5-4 and Comparative Examples 2-1 and 2-2 was 5 to 6, and FIG. 11B is a graph showing ammonia conversion rate data depending on a lanthanum (La) content when the AOR ($NH_3/O_2$ ratio) of the $Ru(3\ wt\%)/Ce_{1-x}La_xO_{2-\delta}$ catalysts according to Examples 5-1 to 5-4 and Comparative Examples 2-1 and 2-2 was 5 to 6.

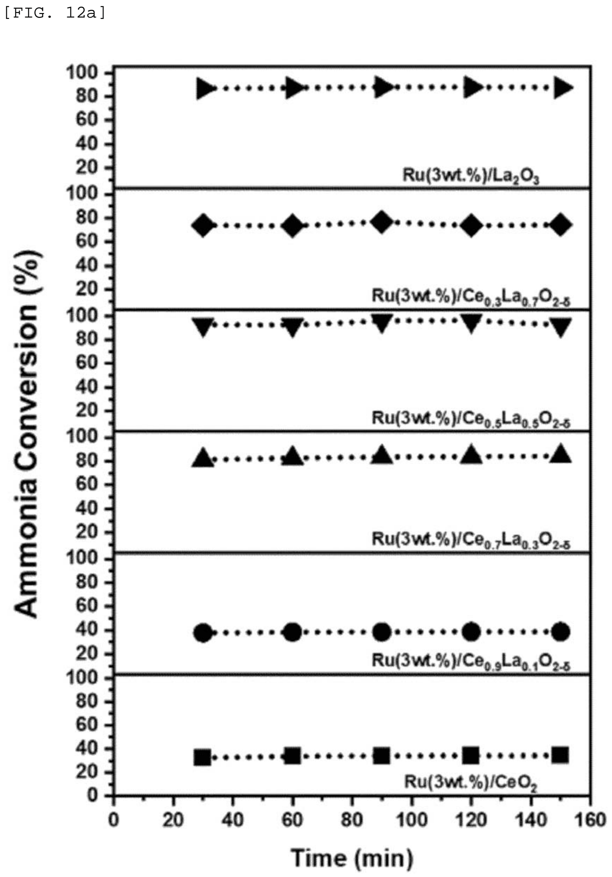

FIG. 12A is a graph showing ammonia conversion rate data over time when the AOR ($NH_3/O_2$ ratio) of the Ru(3

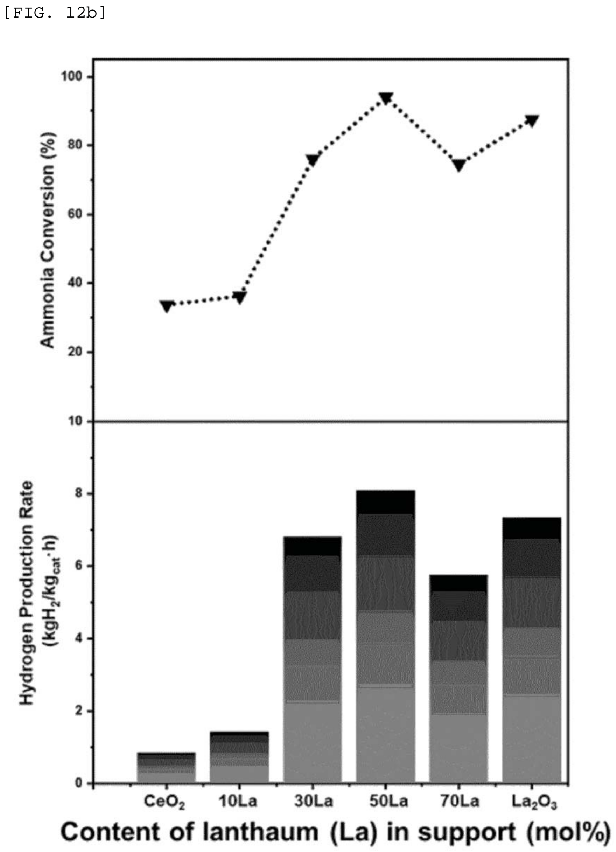

wt%)/$Ce_{1-x}La_xO_{2-\delta}$ catalysts according to Examples 5-1 to 5-4 and Comparative Examples 2-1 and 2-2 was 5 to 6, and FIG. 12B is a graph showing ammonia conversion rate data depending on a lanthanum (La) content when the AOR ($NH_3/O_2$ ratio) of the Ru(3 wt%)/$Ce_{1-x}La_xO_{2-\delta}$ catalysts according to Examples 5-1 to 5-4 and Comparative Examples 2-1 and 2-2 was 5 to 6.

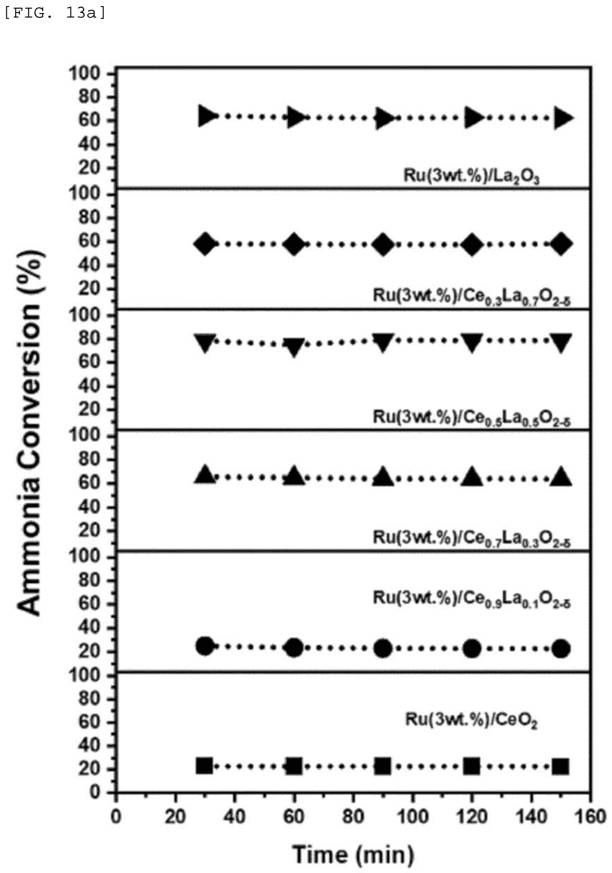

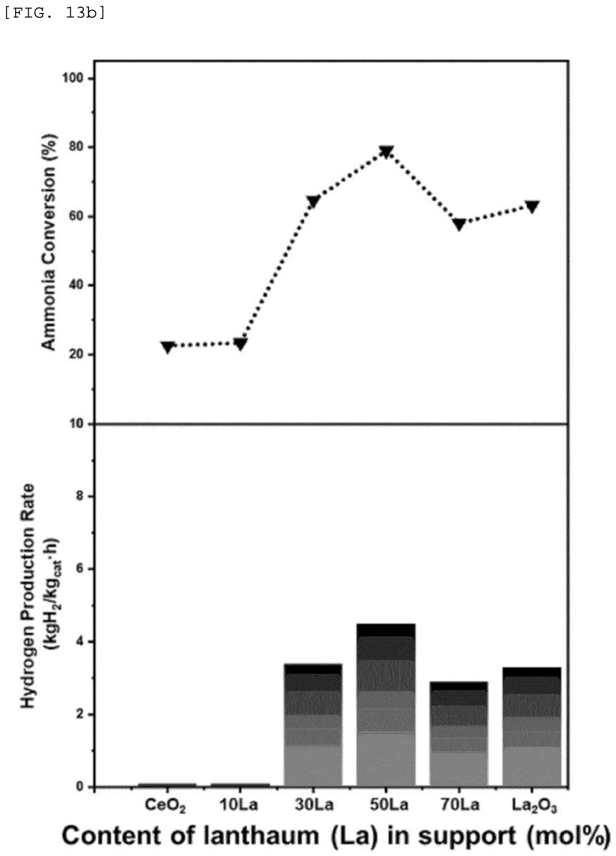

FIG. 13A is a graph showing ammonia conversion rate data over time when the AOR ($NH_3/O_2$ ratio) of the Ru(3 wt%)/$Ce_{1-x}La_xO_{2-\delta}$ catalysts according to Examples 5-1 to 5-4 and Comparative Examples 2-1 and 2-2 was 6 to 7, and FIG. 13B is a graph showing ammonia conversion rate data depending on a lanthanum (La) content when the AOR ($NH_3/O_2$ ratio) of the Ru(3 wt%)/$Ce_{1-x}La_xO_{2-\delta}$ catalysts according to Examples 5-1 to 5-4 and Comparative Examples 2-1 and 2-2 was 6 to 7.

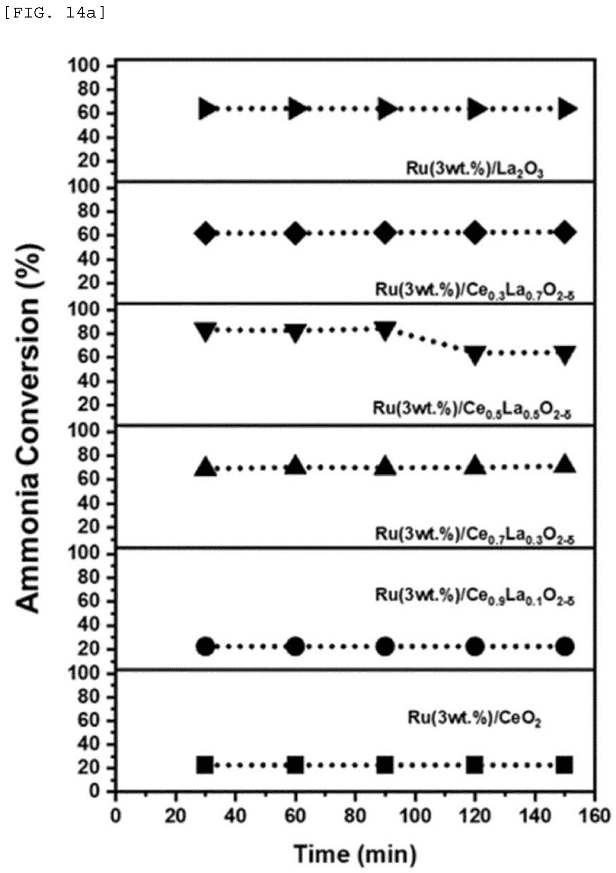

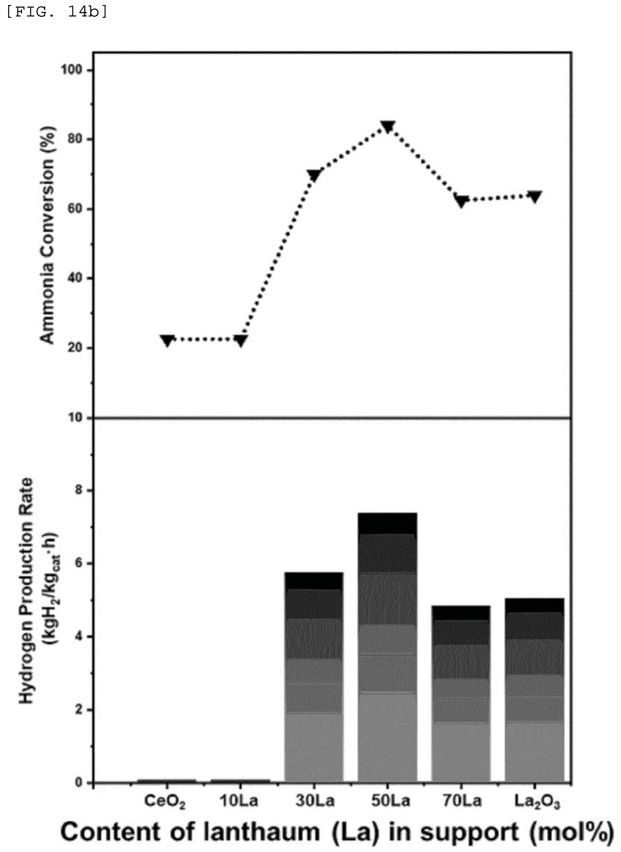

FIG. 14A is a graph showing ammonia conversion rate data over time when an AOR ($NH_3/O_2$ ratio) of the Ru(3 wt%)/$Ce_{1-x}La_xO_{2-\delta}$ catalysts according to Examples 5-1 to 5-4 and Comparative Examples 2-1 and 2-2 was 6 to 7, and FIG. 14B is a graph showing ammonia conversion rate data depending on a lanthanum (La) content when the AOR ($NH_3/O_2$ ratio) of the Ru(3 wt%)/$Ce_{1-x}La_xO_{2-\delta}$ catalysts according to Examples 5-1 to 5-4 and Comparative Examples 2-1 and 2-2 was 6 to 7.

2 wt% described in FIGS. 2A to 6B means that an amount of the ruthenium precursor corresponding to the content of ruthenium (Ru) which is stoichiometrically 2 wt% of the catalyst was used for catalyst synthesis, and 3 wt% described in FIGS. 8 to 14B means that an amount of the ruthenium precursor corresponding to the content of ruthenium (Ru) which is stoichiometrically 3 wt% of the catalyst was used for catalyst synthesis.

Best Mode for Invention

Hereinafter, the exemplary embodiments of the present disclosure will be described in detail so as to be easily practiced by a person with ordinary skill in the art to which the present disclosure pertains, with reference to the accompanying drawings.

However, the following description is not intended to limit the present disclosure to specific embodiments, and in describing the present disclosure, when it is determined that the detailed description of the related known technology may obscure the gist of the present disclosure, the detailed description thereof will be omitted.

Terms used in the present specification are used only in order to describe specific exemplary embodiments rather than limiting the present disclosure. Singular forms are intended to include plural forms unless otherwise indicated contextually. In the present application, it will be further understood that the terms "comprises" or "have" used in this specification, specify the presence of stated features, numerals, steps, operations, components, or a combination thereof, but do not preclude the presence or addition of one or more other features, numerals, steps, operations, components, or a combination thereof.

In addition, terms including ordinal numbers such as first and second may be used for describing various components, but the constituents are not limited by the terms. The terms are used only to distinguish one component from other components. For example, the first component may be named the second component, and the second component may also be similarly named the first component, without departing from the right scope of the present disclosure.

In addition, when it is mentioned that a component is "formed" or "laminated" on the other component, it is to be understood that the component may be formed or attached to be directly attached to the entire surface or one surface of the other component, but another component may be further present therebetween.

Hereinafter, an ammonia partial oxidation-based hydrogen extraction catalyst, a manufacturing method therefor, and a hydrogen extraction method using the catalyst of the present disclosure will be described in detail. However, the description is present only for illustration, the present disclosure is not limited thereto, and the present disclosure is only defined by the scope of the claims described later.

According to an aspect of the present disclosure, a catalyst including: a support including a compound represented by the following Chemical Formula 1; and ruthenium (Ru) loaded on the support is provided:

[Chemical Formula 1]     $Ce_{1-x}M_xO_{2-\delta}$

wherein x satisfies $0<x<1$, M is a lanthanide metal or a transition metal, and $\delta$ satisfies $0<\delta\leq0.5$.

In addition, the lanthanide metal may include one or more selected from the group consisting of lanthanum (La), samarium (Sm), ytterbium (Yb), gadolinium (Gd), and lutetium (Lu).

In addition, the lanthanide metal may include lanthanum (La).

In addition, the lanthanide metal may include lanthanum (La), wherein x satisfies $0.05\leq x\leq0.8$, preferably $0.1\leq x\leq0.7$, and more preferably $0.3\leq x\leq0.6$. Herein, when the range of x is less than 0.05, the reaction does not occur, and ammonia decomposition also does not occur, which is not preferred, and when the range of x is more than 0.8, the specific surface area of the support is rapidly decreased, which is also not preferred.

In addition, the transition metal may include one or more selected from the group consisting of zirconium (Zr), yttrium (Y), iron (Fe), copper (Cu), nickel (Ni), cobalt (Co), and osmium (Os).

In addition, the transition metal may include zirconium (Zr).

In addition, the transition metal may include zirconium (Zr), and x may satisfy $0.05 \leq x \leq 0.5$, preferably $0.1 \leq x \leq 0.4$. Herein, when the range of x is less than 0.05, an exothermic reaction does not occur, which is not preferred, and when the range of x is more than 0.5, ammonia decomposition does not occur, which is also not preferred.

In addition, the catalyst may include 1 to 3 wt%, preferably 1.3 to 2.0 wt% of the ruthenium. Herein, less than 1 wt% of the ruthenium is not preferred, since the ammonia partial oxidation-based hydrogen extraction may not occur, and more than 3 wt% of ruthenium is not preferred, since ammonia decomposition efficiency is low.

In addition, the catalyst may be for extracting hydrogen by decomposing ammonia.

According to another aspect of the present disclosure, a manufacturing method for a catalyst includes: (a) preparing a precursor solution including one or more selected from the group consisting of lanthanide metal precursors and transition metal precursors, a cerium precursor, and water; (b) coprecipitating the precursor of the precursor solution to synthesize a coprecipitate including one or more selected from the group consisting of lanthanide metals and transition metals and cerium; (c) heat treating the coprecipitate to prepare a support; and (d) stirring a support solution including the support, the ruthenium precursor, and water to manufacture a catalyst including a ruthenium-loaded support.

In addition, the catalyst may include a support including a compound represented by the following Chemical Formula 1 and ruthenium (Ru) loaded on the support:

[Chemical Formula 1] $\quad\quad Ce_{1-x}M_xO_{2-\delta}$

wherein x satisfies $0<x<1$, M is a lanthanide metal or a transition metal, and $\delta$ satisfies $0<\delta \leq 0.5$.

First, a precursor solution including one or more selected from the group consisting of lanthanide metal precursors and transition metal precursors, a cerium precursor, and water is prepared (step a).

The pH of the precursor solution of step (a) may be 8 to 11, preferably 9 to 10. Herein, when the pH of the precursor solution is 8 or more, it is easy to separate $Ce^{3+}$ and $M^{3+}$ in the precursor in a basic solution, and it is also easy for the metal cation to form a precipitate in an aqueous solution, which is thus preferred, and when the pH is more than 11, the solubility of the metal precursor is lowered to make it difficult to form a precipitate, which is thus not preferred.

In addition, the lanthanide metal precursor may include a lanthanum nitrate hexahydrate, the transition metal precursor may include a zirconium nitrate hexahydrate, and the cerium precursor may include a cerium nitrate hexahydrate.

The precursor in the precursor solution is coprecipitated to synthesize a coprecipitate including one or more selected from the group consisting of lanthanide metals and transition metals and cerium (step b).

The coprecipitate is heat treated to prepare a support (step c).

The heat treatment of step (c) may be performed in the air.

In addition, the heat treatment of (c) may be performed at 400 to 600°C, preferably 450 to 550°C. Herein, the heat treatment in the hot air improves removal of impurities or adsorbate on the surface of the support and crystallinity of the support, and thus, is preferred. Herein, when a heat treatment temperature is lower than 400°C, the expected preferred effect is highly unlikely to occur, which is thus not preferred, and when the temperature is higher than 600°C, phases having low density or specific surface area may occur in the process of support crystallization at a high temperature, which is thus not preferred.

Finally, the precursor solution including the support, the ruthenium precursor, and water is stirred to manufacture a catalyst including a support loaded by ruthenium (step d).

According to another aspect of the present disclosure, a hydrogen extraction method including: (1) extracting hydrogen by partially oxidizing ammonia in the presence of the catalyst and oxygen is provided.

In addition, the partial oxidation reaction may include an ammonia decomposition reaction and an ammonia oxidation reaction.

In addition, the partial oxidation reaction may be performed by a reaction of the following Reaction Formula 1:

[Reaction Formula 1: Ammonia partial oxidation reaction (heat absorption through injection of small amount of oxygen → conversion into exothermic reaction)] $\quad NH_3(g) + xO_2(g) \rightarrow 0.5N_2(g) + 2xH_2O(g) + (1.5-2x)H_2(g)$ H = 46-484x kJ mol$^{-1}$

wherein x satisfies $0<x<0.75$, preferably $0.15<x<0.65$.

The reaction of Reaction Formula 1 may be performed using heat of reaction by an exothermic reaction of one or more selected from the group consisting of the following Reaction Formula 2 and Reaction Formula 3 and some external heat sources:

[Reaction Formula 2: ammonia thermal decomposition reaction (endothermic)] $NH_3(g) \rightarrow 0.5N_2(g) + 1.5H_2(g)$ $\triangle H = 46$ kJ mol$^{-1}$

[Reaction Formula 3: complete ammonia combustion (reaction in which ammonia is completely combusted without producing hydrogen to form only nitrogen and water vapor)] $NH_3(g) + 0.75O_2(g) \rightarrow 0.5N_2(g) + 1.5H_2O(g)$ $\triangle H = -317$ kJ mol$^{-1}$

In addition, the endothermic reaction of Reaction Formula 2 may be performed using heat of reaction by one or more exothermic reactions selected from the group consisting of Reaction Formula 3.

Ammonia is partially oxidized in the presence of the catalyst and oxygen to extract hydrogen (step 1).

In addition, step (1) may be performed without supplying heat from outside or using some external heat sources.

In addition, in step (1), a Gas Hour Space Velocity (GHSV, L/($g_{cat}$-h)) ratio between ammonia and oxygen may be 2:1 to 6:1, preferably 3:1 to 5:1, and more preferably 3.5:1 to 4.5:1. Herein, in step (1), when the Gas Hour Space Velocity (GHSV, L/($g_{cat}$-h)) ratio between ammonia and oxygen is less than 6:1 (ex. 6.5:1 or 7:1), an ammonia endothermic reaction occurs, which make it difficult to supply sufficient heat, and when the ratio is more than 2:1 (ex. 2.5:1, 1:1, or the like), the reaction is close to a complete combustion reaction due to injection of excess oxygen, and as the reaction is close to a combustion reaction, a hydrogen production amount is decreased, which is not preferred.

In addition, step (1) may be performed at 450 to 700°C, preferably 500 to 650°C. Herein, step (1) corresponds to ammonia thermal decomposition, and when the ammonia thermal decomposition reaction is performed at lower than 450°C, the ammonia conversion rate is low, which is thus not preferred, and when the reaction is performed at higher than 700°C, a large amount of heat of combustion is required in order to maintain a ultrahigh temperature, and overall thermal efficiency reduction is affected, which is thus not preferred.

Mode for Invention

[Examples]

Hereinafter, the present disclosure will be described in detail by way of the examples. However, it is for illustration, and the scope of the present disclosure is not limited thereby.

Preparation Example 1: Synthesis of $Ce_{1-x}La_xO_{2-\delta}$ support according to lanthanum composition ratio

Preparation Example 1-1: $Ce_{0.3}La_{0.7}O_{2-\delta}$ support

2.60532 g of a cerium nitrate hexahydrate ($Ce(NO_3)_3 \cdot 6H_2O$) as a cerium (Ce) precursor and 6.06214 g of a lanthanum nitrate hexahydrate ($La(NO_3)_3 \cdot 6H_2O$) as a metal precursor were stirred in 200 ml of distilled water at 1000 to 1500 rpm for about 1 hour to prepare a support solution, and the pH of the support solution was adjusted to about 9 to 10 using ammonia water. Thereafter, the support solution was dried in an oven at a temperature of 100°C for about 12 hours to prepare a support. The thus-prepared support was separated into the support and distilled water using centrifugation and washed. The support separated from distilled water was further dried in an oven at a temperature of 120°C for about 12 hours, and then the support was heat treated in the air at a temperature of 500°C for 3 hours to prepare a $Ce_{0.3}La_{0.7}O_{2-\delta}$ support. The subscript "2-$\delta$" of oxygen (O) in the chemical formula of the support means formation of an oxygen deficiency point by adding a metal to the support. Herein, since measuring or specifying an exact value of $\delta$ has no significant effect on the results of the following experimental examples, the value was estimated within a range of about 0 to 0.05.

Preparation Example 1-2: $Ce_{0.5}La_{0.5}O_{2-\delta}$ support

A $Ce_{0.5}La_{0.5}O_{2-\delta}$ support was prepared in the same manner as in Preparation Example 1-1, except that 4.3422 g of a cerium nitrate hexahydrate ($Ce(NO_3)_3 \cdot 6H_2O$) as a cerium (Ce) support and 4.3301 g of a lanthanum nitrate hexahydrate ($La(NO_3)_3 \cdot 6H_2O$) as a metal precursor were used, instead of 2.60532 g of a cerium nitrate hexahydrate ($Ce(NO_3)_3 \cdot 6H_2O$) as a cerium (Ce) precursor and 6.06214 g of a lanthanum nitrate hexahydrate ($La(NO_3)_3 \cdot 6H_2O$) as a metal precursor.

Preparation Example 1-3: $Ce_{0.7}La_{0.3}O_{2-\delta}$ support

A $Ce_{0.7}La_{0.3}O_{2-\delta}$ support was prepared in the same manner as in Preparation Example 1-1, except that 6.08 g of a cerium nitrate hexahydrate ($Ce(NO_3)_3 \cdot 6H_2O$) as a cerium (Ce) support and 2.60 g of a lanthanum nitrate hexahydrate ($La(NO_3)_3 \cdot 6H_2O$) as a metal precursor were used, instead of 2.60532 g of a cerium nitrate hexahydrate ($Ce(NO_3)_3 \cdot 6H_2O$)

as a cerium (Ce) precursor and 6.06214 g of a lanthanum nitrate hexahydrate ($La(NO_3)_3 \cdot 6H_2O$) as a metal precursor.

Preparation Example 1-4: $Ce_{0.9}La_{0.1}O_{2-\delta}$ support

A $Ce_{0.9}La_{0.1}O_{2-\delta}$ support was prepared in the same manner as in Preparation Example 1-1, except that 7.816 g of a cerium nitrate hexahydrate ($Ce(NO_3)_3 \cdot 6H_2O$) as a cerium (Ce) support and 0.86602 g of a lanthanum nitrate hexahydrate ($La(NO_3)_3 \cdot 6H_2O$) as a metal precursor were used, instead of 2.60532 g of a cerium nitrate hexahydrate ($Ce(NO_3)_3 \cdot 6H_2O$) as a cerium (Ce) precursor and 6.06214 g of a lanthanum nitrate hexahydrate ($La(NO_3)_3 \cdot 6H_2O$) as a metal precursor.

Preparation Example 1-5: $Ce_{0.95}La_{0.05}O_{2-\delta}$ support

A $Ce_{0.95}La_{0.05}O_{2-\delta}$ support was prepared in the same manner as in Preparation Example 1-1, except that 8.25 g of a cerium nitrate hexahydrate ($Ce(NO_3)_3 \cdot 6H_2O$) as a cerium (Ce) support and 0.43301 g of a lanthanum nitrate hexahydrate ($La(NO_3)_3 \cdot 6H_2O$) as a metal precursor were used, instead of 2.60532 g of a cerium nitrate hexahydrate ($Ce(NO_3)_3 \cdot 6H_2O$) as a cerium (Ce) precursor and 6.06214 g of a lanthanum nitrate hexahydrate ($La(NO_3)_3 \cdot 6H_2O$) as a metal precursor.

Comparative Preparation Example 1-1: $La_2O_3$ support

A $La_2O_3$ support was prepared in the same manner as in Preparation Example 1-1, except that 0 g of a cerium nitrate hexahydrate ($Ce(NO_3)_3 \cdot 6H_2O$) as a cerium (Ce) support and 8.6602 g of a lanthanum nitrate hexahydrate ($La(NO_3)_3 \cdot 6H_2O$) as a metal precursor were used, instead of 2.60532 g of a cerium nitrate hexahydrate ($Ce(NO_3)_3 \cdot 6H_2O$) as a cerium (Ce) precursor and 6.06214 g of a lanthanum nitrate hexahydrate ($La(NO_3)_3 \cdot 6H_2O$) as a metal precursor.

Comparative Preparation Example 1-2: $CeO_2$ support

A $CeO_2$ support was prepared in the same manner as in Preparation Example 1-1, except that 8.6844 g of a cerium nitrate hexahydrate ($Ce(NO_3)_3 \cdot 6H_2O$) as a cerium (Ce) support and 0 g of a lanthanum nitrate hexahydrate ($La(NO_3)_3 \cdot 6H_2O$) as a metal precursor were used, instead of 2.60532 g of a cerium nitrate hexahydrate ($Ce(NO_3)_3 \cdot 6H_2O$) as a cerium (Ce) precursor and 6.06214 g of a lanthanum nitrate hexahydrate ($La(NO_3)_3 \cdot 6H_2O$) as a metal precursor.

Preparation Example 2: Synthesis of $Ce_{1-x}Zr_xO_{2-\delta}$ support according to zirconium composition ratio

Preparation Example 2-1: $Ce_{0.5}Zr_{0.5}O_{2-\delta}$ support

4.3422 g of a cerium nitrate hexahydrate ($Ce(NO_3)_3 \cdot 6H_2O$) as a cerium (Ce) precursor and 3.8301 g of a zirconium nitrate hexahydrate ($Zr(NO_3)_3 \cdot 6H_2O$) as a metal precursor were stirred in 200 ml of distilled water at 1000 to 1500 rpm for about 1 hour to prepare a support solution, and the pH of the support solution was adjusted to about 9 to 10. Thereafter, the support solution was dried in an oven at a temperature of 100°C for about 12 hours to prepare a support. The thus-prepared support was washed using centrifugation and further dried in an oven at a temperature of 120°C for about 12 hours, and then the support was heat treated in the air at a temperature of 500°C for 3 hours to prepare a $Ce_{0.5}Zr_{0.5}O_{2-\delta}$ support. The subscript "$2-\delta$" of oxygen (O) in the chemical formula of the support means formation of an oxygen deficiency point by adding a metal to the support. Herein, since measuring or specifying an exact value of $\delta$ had no significant effect on the results of the following experimental examples, the value was estimated within a range of about 0 to 0.05.

Preparation Example 2-2: $Ce_{0.7}Zr_{0.3}O_{2-\delta}$ support

A $Ce_{0.7}Zr_{0.3}O_{2-\delta}$ support was prepared in the same manner as in Preparation Example 2-1, except that 6.08 g of a cerium nitrate hexahydrate ($Ce(NO_3)_3 \cdot 6H_2O$) as a cerium (Ce) support and 2.30 g of a zirconium nitrate hexahydrate ($Zr(NO_3)_3 \cdot 6H_2O$) as a metal precursor were used, instead of 4.3422 g of a cerium nitrate hexahydrate ($Ce(NO_3)_3 \cdot 6H_2O$) as a cerium (Ce) precursor and 3.8301 g of a zirconium nitrate hexahydrate ($Zr(NO_3)_3 \cdot 6H_2O$) as a metal precursor.

Preparation Example 2-3: $Ce_{0.9}Zr_{0.1}O_{2-\delta}$ support

A $Ce_{0.9}Zr_{0.1}O_{2-\delta}$ support was prepared in the same manner as in Preparation Example 2-1, except that 7.816 g of a cerium nitrate hexahydrate ($Ce(NO_3)_3 \cdot 6H_2O$) as a cerium (Ce) support and 0.76602 g of a zirconium nitrate hexahydrate

$(Zr(NO_3)_3 \cdot 6H_2O)$ as a metal precursor were used, instead of 4.3422 g of a cerium nitrate hexahydrate $(Ce(NO_3)_3 \cdot 6H_2O)$ as a cerium (Ce) precursor and 3.8301 g of a zirconium nitrate hexahydrate $(Zr(NO_3)_3 \cdot 6H_2O)$ as a metal precursor.

Preparation Example 2-4: $Ce_{0.95}Zr_{0.05}O_{2-\delta}$ support

A $Ce_{0.95}Zr_{0.05}O_{2-\delta}$ support was prepared in the same manner as in Preparation Example 2-1, except that 8.25 g of a cerium nitrate hexahydrate $(Ce(NO_3)_3 \cdot 6H_2O)$ as a cerium (Ce) support and 0.38301 g of a zirconium nitrate hexahydrate $(Zr(NO_3)_3 \cdot 6H_2O)$ as a metal precursor were used, instead of 4.3422 g of a cerium nitrate hexahydrate $(Ce(NO_3)_3 \cdot 6H_2O)$ as a cerium (Ce) precursor and 3.8301 g of a zirconium nitrate hexahydrate $(Zr(NO_3)_3 \cdot 6H_2O)$ as a metal precursor.

Preparation Example 3: Synthesis of $Ce_{1-x}M_xO_{2-\delta}$ support according to the type of lanthanide metal (M)

Preparation Example 3-1: $Ce_{0.9}Sm_{0.1}O_{2-\delta}$ support

7.816 g of a cerium nitrate hexahydrate $(Ce(NO_3)_3 \cdot 6H_2O)$ as a cerium (Ce) precursor and 0.88894 g of a samarium nitrate hexahydrate $(Sm(NO_3)_3 \cdot 6H_2O)$ as a lanthanide metal precursor were stirred in 200 ml of distilled water at 1000 to 1500 rpm for about 1 hour to prepare a support solution, and the pH of the support solution was adjusted to about 9 to 10. Thereafter, the support solution was dried in an oven at a temperature of 100°C for about 12 hours to prepare a support. The thus-prepared support was washed using centrifugation and further dried in an oven at a temperature of 120°C for about 12 hours, and then the support was heat treated in the air at a temperature of 500°C for 3 hours to prepare a $Ce_{0.9}Sm_{0.1}O_{2-\delta}$ support. The subscript "$2-\delta$" of oxygen (O) in the chemical formula of the support means formation of an oxygen deficiency point by adding a metal to the support. Herein, since measuring or specifying an exact value of $\delta$ had no significant effect on the results of the following experimental examples, the value was estimated within a range of about 0 to 0.05.

Preparation Example 3-2: $Ce_{0.9}Yb_{0.1}O_{2-\delta}$ support

A $Ce_{0.9}Yb_{0.1}O_{2-\delta}$ support was prepared in the same manner as in Preparation Example 3-1, except that 0.89826 g of a ytterbium nitrate hexahydrate $(Yb(NO_3)_3 \cdot 6H_2O)$ was used, instead of 0.88894 g of samarium nitrate hexahydrate $(Sm(NO_3)_3 \cdot 6H_2O)$ as a lanthanide metal precursor.

Preparation Example 4: Synthesis of $Ce_{1-x}M_xO_{2-\delta}$ support according to the type of transition metal (M)

Preparation Example 4-1: $Ce_{0.9}Y_{0.1}O_{2-\delta}$ support

7.816 g of a cerium nitrate hexahydrate $(Ce(NO_3)_3 \cdot 6H_2O)$ as a cerium (Ce) precursor and 0.76602 g of a yttrium(III) nitrate hexahydrate $(Y(NO_3)_3 \cdot 6H_2O)$ as a transition metal precursor were stirred in 200 ml of distilled water at 1000 to 1500 rpm for about 1 hour to prepare a support solution, and the pH of the support solution was adjusted to about 9 to 10. Thereafter, the support solution was dried in an oven at a temperature of 100°C for about 12 hours to prepare a support. The thus-prepared support was washed using centrifugation and further dried in an oven at a temperature of 120°C for about 12 hours, and then the support was heat treated in the air at a temperature of 500°C for 3 hours to prepare a $Ce_{0.9}Y_{0.1}O_{2-\delta}$ support. The subscript "$2-\delta$" of oxygen (O) in the chemical formula of the support means formation of an oxygen deficiency point by adding a metal to the support. Herein, since measuring or specifying an exact value of $\delta$ had no significant effect on the results of the following experimental examples, the value was estimated within a range of about 0 to 0.05.

Preparation Example 4-2: $Ce_{0.9}Fe_{0.1}O_{2-\delta}$ support

A $Ce_{0.9}Fe_{0.1}O_{2-\delta}$ support was prepared in the same manner as in Preparation Example 4-1, except that 0.808 g of an iron(III) nitrate nonahydrate $(Fe(NO_3)_3 \cdot 9H_2O)$ was used, instead of 0.76602 g a yttrium(III) nitrate hexahydrate $(Y(NO_3)_3 \cdot 6H_2O)$ as a transition metal precursor.

Preparation Example 4-3: $Ce_{0.9}Cu_{0.1}O_{2-\delta}$ support

A $Ce_{0.9}Cu_{0.1}O_{2-\delta}$ support was prepared in the same manner as in Preparation Example 4-1, except that 0.482 g of a copper(II) nitrate trihydrate $(Cu(NO_3)_3 \cdot 3H_2O)$ was used, instead of 0.76602 g a yttrium(III) nitrate hexahydrate $(Y(NO_3)_3 \cdot 6H_2O)$ as a transition metal precursor.

Preparation Example 4-4: $Ce_{0.9}Ni_{0.1}O_{2-\delta}$ support

A $Ce_{0.9}Ni_{0.1}O_{2-\delta}$ support was prepared in the same manner as in Preparation Example 4-1, except that 0.582 g of a nickel(II) nitrate hexahydrate ($Ni(NO_3)_3 \cdot 6H_2O$) was used, instead of 0.76602 g a yttrium(III) nitrate hexahydrate ($Y(NO_3)_3 \cdot 6H_2O$) as a transition metal precursor.

Preparation Example 4-5: $Ce_{0.9}Co_{0.1}O_{2-\delta}$ support

A $Ce_{0.9}Co_{0.1}O_{2-\delta}$ support was prepared in the same manner as in Preparation Example 4-1, except that 0.582 g of a cobalt(II) nitrate hexahydrate ($Co(NO_3)_3 \cdot 6H_2O$) was used, instead of 0.76602 g a yttrium(III) nitrate hexahydrate ($Y(NO_3)_3 \cdot 6H_2O$) as a transition metal precursor.

Example 1: Manufacture of catalyst by loading ruthenium (Ru) on lanthanum support

Example 1-1: $Ru/Ce_{0.3}La_{0.7}O_{2-\delta}$

1.026 g of a ruthenium chloride hydrate ($RuCl_3 \cdot xH_2O$) as a ruthenium precursor was diluted in 50 ml of distilled water to prepare a ruthenium solution, 2 ml of the ruthenium solution (2 wt% Ru) and 1 g of the $Ce_{0.3}La_{0.7}O_{2-\delta}$ support according to Preparation Example 1-1 were stirred in 100 ml of distilled water at 400 rpm for about 24 hours to prepare a catalyst solution, and the pH of the catalyst solution was adjusted to about 9 to 10. Thereafter, distilled water and the ruthenium metal-loaded catalyst were separated using a vacuum filter and washed, the catalyst was dried in an oven at a temperature of 120°C for 12 hours, and the remaining distilled water was removed to manufacture a ruthenium-loaded $Ru/Ce_{0.3}La_{0.7}O_{2-\delta}$ catalyst. The subscript "$2-\delta$" of oxygen (O) in the chemical formula of the catalyst means formation of an oxygen deficiency point by adding a metal to the support. Herein, since measuring or specifying an exact value of $\delta$ had no significant effect on the results of the following experimental examples, the value was estimated within a range of about 0 to 0.05.
2 wt% described in the example means that an amount of the ruthenium precursor corresponding to the content of ruthenium (Ru) which is stoichiometrically 2 wt% of the catalyst was used for catalyst synthesis.

Example 1-2: $Ru/Ce_{0.5}La_{0.5}O_{2-\delta}$

A ruthenium-loaded $Ru/Ce_{0.5}La_{0.5}O_{2-\delta}$ catalyst was manufactured in the same manner as in Example 1-1, except that the $Ce_{0.5}La_{0.5}O_{2-\delta}$ support according to Preparation Example 1-2 was used, instead of the $Ce_{0.3}La_{0.7}O_{2-\delta}$ support according to Preparation Example 1-1.

Example 1-3: $Ru/Ce_{0.7}La_{0.3}O_{2-\delta}$

A ruthenium-loaded $Ru/Ce_{0.7}La_{0.3}O_{2-\delta}$ catalyst was manufactured in the same manner as in Example 1-1, except that the $Ce_{0.7}La_{0.3}O_{2-\delta}$ support according to Preparation Example 1-3 was used, instead of the $Ce_{0.3}La_{0.7}O_{2-\delta}$ support according to Preparation Example 1-1.

Example 1-4: $Ru/Ce_{0.9}La_{0.1}O_{2-\delta}$

A ruthenium-loaded $Ru/Ce_{0.9}La_{0.1}O_{2-\delta}$ catalyst was manufactured in the same manner as in Example 1-1, except that the $Ce_{0.9}La_{0.1}O_{2-\delta}$ support according to Preparation Example 1-4 was used, instead of the $Ce_{0.3}La_{0.7}O_{2-\delta}$ support according to Preparation Example 1-1.

Example 1-5: $Ru/Ce_{0.95}La_{0.05}O_{2-\delta}$

A ruthenium-loaded $Ru/Ce_{0.95}La_{0.05}O_{2-\delta}$ catalyst was manufactured in the same manner as in Example 1-1, except that the $Ce_{0.95}La_{0.05}O_{2-\delta}$ support according to Preparation Example 1-5 was used, instead of the $Ce_{0.3}La_{0.7}O_{2-\delta}$ support according to Preparation Example 1-1.

Comparative Example 1-1: $Ru/La_2O_3$

A ruthenium-loaded $Ru/La_2O_3$ catalyst was manufactured in the same manner as in Example 1-1, except that the $La_2O_3$ support according to Comparative Preparation Example 1-1 was used, instead of the $Ce_{0.5}La_{0.5}O_{2-\delta}$ support according to Preparation Example 1-1.

Example 2: Manufacture of catalyst by loading ruthenium (Ru) on zirconium support

Example 2-1: Ru/Ce$_{0.5}$Zr$_{0.5}$O$_{2-\delta}$

1.026 g of a ruthenium chloride hydrate (RuCl$_3$·xH$_2$O) as a ruthenium precursor was diluted in 50 ml of distilled water to prepare a ruthenium solution, 2 ml of the ruthenium solution (2 wt% Ru) and 1 g of the Ce$_{0.5}$Zr$_{0.5}$O$_{2-\delta}$ support according to Preparation Example 2-1 were stirred in 100 ml of distilled water at 400 rpm for about 24 hours to prepare a catalyst solution, and the pH of the catalyst solution was adjusted to about 9 to 10. Thereafter, distilled water and the ruthenium metal-loaded catalyst were separated using a vacuum filter and washed, the catalyst was dried in an oven at a temperature of 120°C for 12 hours, and the remaining distilled water was removed to manufacture a ruthenium-loaded Ru/Ce$_{0.5}$Zr$_{0.5}$O$_{2-\delta}$ catalyst. The subscript "2-$\delta$" of oxygen (O) in the chemical formula of the catalyst means formation of an oxygen deficiency point by adding a metal to the support. Herein, since measuring or specifying an exact value of $\delta$ had no significant effect on the results of the following experimental examples, the value was estimated within a range of about 0 to 0.05.

Example 2-2: Ru/Ce$_{0.7}$Zr$_{0.3}$O$_{2-\delta}$

A ruthenium-loaded Ru/Ce$_{0.7}$Zr$_{0.3}$O$_{2-\delta}$ catalyst was manufactured in the same manner as in Example 2-1, except that the Ce$_{0.7}$Zr$_{0.3}$O$_{2-\delta}$ support according to Preparation Example 2-2 was used, instead of the Ce$_{0.5}$Zr$_{0.5}$O$_{2-\delta}$ support as a metal precursor according to Preparation Example 2-1.

Example 2-3: Ru/Ce$_{0.9}$Zr$_{0.1}$O$_{2-\delta}$

A ruthenium-loaded Ru/Ce$_{0.9}$Zr$_{0.1}$O$_{2-\delta}$ catalyst was manufactured in the same manner as in Example 2-1, except that the Ce$_{0.9}$Zr$_{0.1}$O$_{2-\delta}$ support according to Preparation Example 2-3 was used, instead of the Ce$_{0.5}$Zr$_{0.5}$O$_{2-\delta}$ support as a metal precursor according to Preparation Example 2-1.

Example 2-4: Ru/Ce$_{0.95}$Zr$_{0.05}$O$_{2-\delta}$

A ruthenium-loaded Ru/Ce$_{0.95}$Zr$_{0.05}$O$_{2-\delta}$ catalyst was manufactured in the same manner as in Example 2-1, except that the Ce$_{0.95}$Zr$_{0.05}$O$_{2-\delta}$ support according to Preparation Example 2-3 was used, instead of the Ce$_{0.5}$Zr$_{0.5}$O$_{2-\delta}$ support as a metal precursor according to Preparation Example 2-1.

Example 3: Manufacture of catalyst by loading ruthenium (Ru) on support including lanthanide-based metal

Example 3-1: Ru/Ce$_{0.9}$Sm$_{0.1}$O$_{2-\delta}$

1.026 g of a ruthenium chloride hydrate (RuCl$_3$·xH$_2$O) as a ruthenium precursor was diluted in 50 ml of distilled water to prepare a ruthenium solution, 2 ml of the ruthenium solution (2 wt% Ru) and 1 g of the Ce$_{0.9}$Sm$_{0.1}$O$_{2-\delta}$ support according to Preparation Example 3-1 were stirred in 100 ml of distilled water at 400 rpm for about 24 hours to prepare a catalyst solution, and the pH of the catalyst solution was adjusted to about 9 to 10. Thereafter, distilled water and the ruthenium metal-loaded catalyst were separated using a vacuum filter and washed, the catalyst was dried in an oven at a temperature of 120°C for 12 hours, and the remaining distilled water was removed to manufacture a ruthenium-loaded Ru/Ce$_{0.9}$Sm$_{0.1}$O$_{2-\delta}$ catalyst. The subscript "2-$\delta$" of oxygen (O) in the chemical formula of the catalyst means formation of an oxygen deficiency point by adding a metal to the support. Herein, since measuring or specifying an exact value of $\delta$ had no significant effect on the results of the following experimental examples, the value was estimated within a range of about 0 to 0.05.

Example 3-2: Ru/Ce$_{0.9}$Yb$_{0.1}$O$_{2-\delta}$

A ruthenium-loaded Ru/Ce$_{0.9}$Yb$_{0.1}$O$_{2-\delta}$ catalyst was manufactured in the same manner as in Example 3-1, except that the Ce$_{0.9}$Yb$_{0.1}$O$_{2-\delta}$ support according to Preparation Example 3-2 was used, instead of the Ce$_{0.9}$Sm$_{0.1}$O$_{2-\delta}$ support as a metal precursor according to Preparation Example 3-1.

Example 4: Manufacture of catalyst by loading ruthenium (Ru) on support including transition metal

Example 4-1: $Ru/Ce_{0.9}Y_{0.1}O_{2-\delta}$

1.026 g of a ruthenium chloride hydrate ($RuCl_3 \cdot xH_2O$) as a ruthenium precursor was diluted in 50 ml of distilled water to prepare a ruthenium solution, 2 ml of the ruthenium solution (2 wt% Ru) and 1 g of the $Ce_{0.9}Y_{0.1}O_{2-\delta}$ support according to Preparation Example 4-1 were stirred in 100 ml of distilled water at 400 rpm for about 24 hours to prepare a catalyst solution, and the pH of the catalyst solution was adjusted to about 9 to 10. Thereafter, distilled water and the ruthenium metal-loaded catalyst were separated using a vacuum filter and washed, the catalyst was dried in an oven at a temperature of 120°C for 12 hours, and the remaining distilled water was removed to manufacture a ruthenium-loaded $Ru/Ce_{0.9}Y_{0.1}O_{2-\delta}$ catalyst. The subscript "2-$\delta$" of oxygen (O) in the chemical formula of the catalyst means formation of an oxygen deficiency point by adding a metal to the support. Herein, since measuring or specifying an exact value of $\delta$ had no significant effect on the results of the following experimental examples, the value was estimated within a range of about 0 to 0.05.

Example 4-2: $Ru/Ce_{0.9}Fe_{0.1}O_{2-\delta}$

A ruthenium-loaded $Ru/Ce_{0.9}Fe_{0.1}O_{2-\delta}$ catalyst was manufactured in the same manner as in Example 4-1, except that the $Ce_{0.9}Fe_{0.1}O_{2-\delta}$ support according to Preparation Example 4-2 was used, instead of the $Ce_{0.9}Y_{0.1}O_{2-\delta}$ support as a metal precursor according to Preparation Example 4-1.

Example 4-3: $Ru/Ce_{0.9}Cu_{0.1}O_{2-\delta}$

A ruthenium-loaded $Ru/Ce_{0.9}Cu_{0.1}O_{2-\delta}$ catalyst was manufactured in the same manner as in Example 4-1, except that the $Ce_{0.9}Cu_{0.1}O_{2-\delta}$ support according to Preparation Example 4-3 was used, instead of the $Ce_{0.9}Y_{0.1}O_{2-\delta}$ support as a metal precursor according to Preparation Example 4-1.

Example 4-4: $Ru/Ce_{0.9}Ni_{0.1}O_{2-\delta}$

A ruthenium-loaded $Ru/Ce_{0.9}Ni_{0.1}O_{2-\delta}$ catalyst was manufactured in the same manner as in Example 4-1, except that the $Ce_{0.9}Ni_{0.1}O_{2-\delta}$ support according to Preparation Example 4-4 was used, instead of the $Ce_{0.9}Y_{0.1}O_{2-\delta}$ support as a metal precursor according to Preparation Example 4-1.

Example 4-5: $Ru/Ce_{0.9}Co_{0.1}O_{2-\delta}$

A ruthenium-loaded $Ru/Ce_{0.9}Co_{0.1}O_{2-\delta}$ catalyst was manufactured in the same manner as in Example 4-1, except that the $Ce_{0.9}Co_{0.1}O_{2-\delta}$ support according to Preparation Example 4-5 was used, instead of the $Ce_{0.9}Y_{0.1}O_{2-\delta}$ support as a metal precursor according to Preparation Example 4-1.

Example 5: Manufacture of catalyst by loading 3 wt% ruthenium on lanthanum support

Example 5-1: $Ru(3\ wt\%)/Ce_{0.3}La_{0.7}O_{2-\delta}$

1.03 g of a ruthenium chloride hydrate ($RuCl_3 \cdot xH_2O$) as a ruthenium precursor was diluted in 50 ml of distilled water to prepare a ruthenium solution, 3 ml of the ruthenium solution (3 wt% Ru) and 1 g of the $Ce_{0.3}La_{0.7}O_{2-\delta}$ support according to Preparation Example 1-1 were stirred in 100 ml of distilled water at 400 rpm for about 24 hours to prepare a catalyst solution, and the pH of the catalyst solution was adjusted to about 9 to 10. Thereafter, distilled water and the ruthenium metal-loaded catalyst were separated using a vacuum filter and washed, the catalyst was dried in an oven at a temperature of 120°C for 12 hours, and the remaining distilled water was removed to manufacture a ruthenium-loaded $Ru/Ce_{0.3}La_{0.7}O_{2-\delta}$ catalyst. The subscript "2-$\delta$" of oxygen (O) in the chemical formula of the catalyst means formation of an oxygen deficiency point by adding a metal to the support. Herein, since measuring or specifying an exact value of $\delta$ had no significant effect on the results of the following experimental examples, the value was estimated within a range of about 0 to 0.05.

3 wt% described in the example means that an amount of the ruthenium precursor corresponding to the content of ruthenium (Ru) which is stoichiometrically 3 wt% of the catalyst was used for catalyst synthesis.

Example 5-2: $Ru(3\ wt\%)/Ce_{0.5}La_{0.5}O_{2-\delta}$

A ruthenium-loaded $Ru(3\ wt\%)/Ce_{0.5}La_{0.5}O_{2-\delta}$ catalyst was manufactured in the same manner as in Example 5-1, except that the $Ce_{0.5}La_{0.5}O_{2-\delta}$ support according to Preparation Example 1-2 was used, instead of the $Ce_{0.3}La_{0.7}O_{2-\delta}$

support according to Preparation Example 1-1.

Example 5-3: Ru(3 wt%)/Ce$_{0.7}$La$_{0.3}$O$_{2-\delta}$

A ruthenium-loaded Ru(3 wt%)/Ce$_{0.7}$La$_{0.3}$O$_{2-\delta}$ catalyst was manufactured in the same manner as in Example 5-1, except that the Ce$_{0.7}$La$_{0.3}$O$_{2-\delta}$ support according to Preparation Example 1-3 was used, instead of the Ce$_{0.3}$La$_{0.7}$O$_{2-\delta}$ support according to Preparation Example 1-1.

Example 5-4: Ru(3 wt%)/Ce$_{0.9}$La$_{0.1}$O$_{2-\delta}$

A ruthenium-loaded Ru(3 wt%)/Ce$_{0.9}$La$_{0.1}$O$_{2-\delta}$ catalyst was manufactured in the same manner as in Example 5-1, except that the Ce$_{0.9}$La$_{0.1}$O$_{2-\delta}$ support according to Preparation Example 1-4 was used, instead of the Ce$_{0.3}$La$_{0.7}$O$_{2-\delta}$ support according to Preparation Example 1-1.

Comparative Example 2-1: Ru(3 wt%)/La$_2$O$_3$

A ruthenium-loaded Ru(3 wt%)/La$_2$O$_3$ catalyst was manufactured in the same manner as in Example 5-1, except that the La$_2$O$_3$ support according to Comparative Preparation Example 1-1 was used, instead of the Ce$_{0.3}$La$_{0.7}$O$_{2-\delta}$ support according to Preparation Example 1-1.

Comparative Example 2-2: Ru(3 wt%)/CeO$_2$

A ruthenium-loaded Ru(3 wt%)/CeO$_2$ catalyst was manufactured in the same manner as in Example 5-1, except that the CeO$_2$ support according to Comparative Preparation Example 1-2 was used, instead of the Ce$_{0.3}$La$_{0.7}$O$_{2-\delta}$ support according to Preparation Example 1-1.

[Test Examples]

Evaluation of partial oxidation reaction gas concentration

Evaluation of partial oxidation reaction gas concentration was performed with the catalysts according to Examples 1-1 to 1-5 and Comparative Example 1-1, Ru/Ce$_{1-x}$La$_x$O$_{2-\delta}$ (x=0.05, 0.1, 0.3, 0.5, 0.7, 1.0). The following Table 1 shows data of calculation of gas coefficient changes according to the ammonia partial oxidation reaction, and the following Table 2 shows a calculation formula of gas production and conversion indicators in the ammonia partial oxidation reaction.

[Table 1]

| Ammonia partial oxidation formula | NH$_3$ (g) | 0.25 O$_2$ (g) | → | a N$_2$ (9) | b H$_2$ (g) | c NH$_3$ (g) | d H$_2$O (g) |
|---|---|---|---|---|---|---|---|
| Ammonia combustion reaction | -0.33 | -0.25 | → | +0.167 | | | 0.5 |
| Ammonia decomposition reaction | -x | | → | +0.5x | +1.5x | 0.67-x | |

[Table 2]

| NH$_3$ Conversion (%) | $\dfrac{C_{in\ NH3} - C_{out\ NH3}}{C_{in\ NH3}} \times 100$ | α | $\dfrac{C_{out\ H2}}{C_{out\ N2}}$ |
|---|---|---|---|
| H$_2$ Yield (%) | $\dfrac{0.5 \times \alpha}{3 - \alpha} \times 100$ | N$_2$ Yield (%) | $\dfrac{0.5}{3 - \alpha} \times 100$ |

α of Table 2 may be represented by the following Equation 1:

[Equation 1]

$$\alpha = \frac{b}{a} = \frac{C_{out\ H2}}{Cout\ N2} = \frac{1.5x}{0.5x+0.167}$$

x values are found from the above Equation 1 to find coefficient (a, b, c, d) values corresponding to each gas. The coefficient values are used and applied to the following Equation 2 to analyze detailed gas concentration, thereby showing the catalyst evaluation results:

$$NH_3(g) + 0.25\ O_2(g) \rightarrow aN_2(g) + bH_2(g) + cNH_3(g) + 0.5\ H_2O(g) \qquad [Equation\ 2]$$

Test Example 1: Evaluation of inductively coupled plasma (ICP) mass analysis

Evaluation of inductively coupled plasma (ICP) mass analysis was performed with the supports according to Preparation Examples 1-1 to 1-5, 2-1 to 2-4, 3-1, 3-2, and 4-1 to 4-5, and Comparative Preparation Example 1-1 and the catalysts according to Examples 1-2 and 1-3. The following Table 3 shows metal content data according to the inductively coupled plasma (ICP) mass analysis of the supports according to Preparation Examples 1-1 to 1-5, 2-1 to 2-4, 3-1, 3-2, and 4-1 to 4-5, and Comparative Preparation Examples 1-1 and 1-2, and the following Table 4 shows metal content data according to inductively coupled plasma (ICP) mass analysis of the catalysts according to Examples 1 to 5 and Comparative Examples 1 and 2.

[Table 3]

| Classification | Support | Metal | Metal content (mol%) |
|---|---|---|---|
| Preparation Example 1-1 | $Ce_{0.3}La_{0.7}O_{2-\delta}$ | Lanthanum (La) | Ce: 34, La: 66 |
| Preparation Example 1-2 | $Ce_{0.5}La_{0.5}O_{2-\delta}$ | Lanthanum (La) | Ce: 50, La: 50 |
| Preparation Example 1-3 | $Ce_{0.7}La_{0.3}O_{2-\delta}$ | Lanthanum (La) | Ce: 66, La: 34 |
| Preparation Example 1-4 | $Ce_{0.9}La_{0.1}O_{2-\delta}$ | Lanthanum (La) | Ce: 92, La: 8 |
| Preparation Example 1-5 | $Ce_{0.95}La_{0.05}O_{2-\delta}$ | Lanthanum (La) | La: Less than 8 |
| Comparative Preparation Example 1-1 | $La_2O_3$ | Lanthanum (La) | La: 100 |
| Comparative Preparation Example 1-2 | $CeO_2$ | - | - |
| Preparation Example 2-1 | $Ce_{0.5}Zr_{0.5}O_{2-\delta}$ | Zirconium (Zr) | Ce: 57, Zr: 43 |
| Preparation Example 2-2 | $Ce_{0.7}Ze_{0.3}O_{2-\delta}$ | Zirconium (Zr) | Ce: 68, Zr: 32 |
| Preparation Example 2-3 | $Ce_{0.9}Zr_{0.1}O_{2-\delta}$ | Zirconium (Zr) | Ce: 86, Zr: 14 |
| Preparation Example 2-4 | $Ce_{0.95}Zr_{0.05}O_{2-\delta}$ | Zirconium (Zr) | Ce: 93, Zr: 7 |
| Preparation Example 3-1 | $Ce_{0.9}Sm_{0.1}O_{2-\delta}$ | Samarium (Sm) | Ce: 90, Sm: 10 |
| Preparation Example 3-2 | $Ce_{0.9}Yb_{0.1}O_{2-\delta}$ | Ytterbium (Yb) | - |
| Preparation Example 4-1 | $Ce_{0.9}Y_{0.1}O_{2-\delta}$ | Yttrium (Y) | Ce: 84, Y: 16 |
| Preparation Example 4-2 | $Ce_{0.9}Fe_{0.1}O_{2-\delta}$ | Iron (Fe) | - |
| Preparation Example 4-3 | $Ce_{0.9}Cu_{0.1}O_{2-\delta}$ | Copper (Cu) | - |
| Preparation Example 4-4 | $Ce_{0.9}Ni_{0.1}O_{2-\delta}$ | Nickel (Ni) | - |
| Preparation Example 4-5 | $Ce_{0.9}Co_{0.1}O_{2-\delta}$ | Cobalt (Co) | - |

In Table 3, the metal contents of the Preparation Examples 3-2 and 4-2 to 4-5 in which the metal content was not described were not able to be measured by the inductively coupled plasma (ICP) mass analysis.

[Table 4]

| Classification | Catalyst name | Metal | Ru content (wt%) |
|---|---|---|---|
| Example 1-1 | $Ru/Ce_{0.3}La_{0.7}O_{2-\delta}$ | Lanthanum (La) | Ru: 1.0 |
| Example 1-2 | $Ru/Ce_{0.5}La_{0.5}O_{2-\delta}$ | Lanthanum (La) | Ru: 1.5 |
| Example 1-3 | $Ru/Ce_{0.7}La_{0.3}O_{2-\delta}$ | Lanthanum (La) | Ru: 1.82 |
| Example 1-4 | $Ru/Ce_{0.9}La_{0.1}O_{2-\delta}$ | Lanthanum (La) | Ru: 1.1 |
| Example 1-5 | $Ru/Ce_{0.95}La_{0.05}O_{2-\delta}$ | Lanthanum (La) | Ru: <2 |
| Comparative Example 1-1 | $Ru/La_2O_3$ | Lanthanum (La) | Ru: 2- |
| Example 2-1 | $Ru/Ce_{0.5}Zr_{0.5}O_{2-\delta}$ | Zirconium (Zr) | Ru: 1.4 |
| Example 2-2 | $Ru/Ce_{0.7}Zr_{0.3}O_{2-\delta}$ | Zirconium (Zr) | Ru: 1.4 |
| Example 2-3 | $Ru/Ce_{0.9}Zr_{0.1}O_{2-\delta}$ | Zirconium (Zr) | Ru: 1.5 |
| Example 2-4 | $Ru/Ce_{0.95}Zr0.5O_{2-\delta}$ | Zirconium (Zr) | Ru: 1.1 |
| Example 3-1 | $Ru/Ce_{0.9}Sm_{0.1}O_{2-\delta}$ | Samarium (Sm) | Ru: 0.7 |
| Example 3-2 | $Ru/Ce0.9Yb_{0.1}O_{2-\delta}$ | Ytterbium (Yb) | Ru: 1.24 |
| Example 4-1 | $Ru/Ce0.9Y_{0.1}O_{2-\delta}$ | Yttrium (Y) | Ru: 2.02 |
| Example 4-2 | $Ru/Ce_{0.9}Fe_{0.1}O_{2-\delta}$ | Iron (Fe) | Ru: 1.0 |
| Example 4-3 | $Ru/Ce_{0.9}Cu_{0.1}O_{2-\delta}$ | Copper (Cu) | Ru: 1.61 |
| Example 4-4 | $Ru/Ce_{0.9}Ni_{0.1}O_{2-\delta}$ | Nickel (Ni) | Ru: 1.0 |
| Example 4-5 | $Ru/Ce_{0.9}Co_{0.1}O_{2-\delta}$ | Cobalt (Co) | Ru: 1.7 |
| Example 5-1 | $Ru/Ce_{0.3}La_{0.7}O_{2-\delta}$ | Lanthanum (La) | Ru: 2.7 |
| Example 5-2 | $Ru/Ce_{0.5}La_{0.5}O_{2-\delta}$ | Lanthanum (La) | Ru: 3.00 |
| Example 5-3 | $Ru/Ce_{0.7}La_{0.3}O_{2-\delta}$ | Lanthanum (La) | Ru: 2.96 |
| Example 5-4 | $Ru/Ce_{0.9}La_{0.1}O_{2-\delta}$ | Lanthanum (La) | Ru: 2.73 |
| Comparative Example 2-1 | $Ru/La_2O_3$ | Lanthanum (La) | Ru: 3.09 |
| Comparative Example 2-1 | $Ru/CeO_2$ | Lanthanum (La) | Ru: 2.99 |

In Table 4, in Examples 1-1 to 1-5, 2-1 to 2-4, 3-1, 3-2, and 4-1 to 4-5, the ruthenium precursor was used after calculating the content of ruthenium (Ru) in the catalyst so that the content was stoichiometrically 2 wt%, but the final content of ruthenium (R) in the synthesized catalyst was confirmed to be 0.7 to 2.02 wt%, and in Examples 5-1 to 5-4 and Comparative Examples 2-1 and 2-2, the ruthenium precursor was used after calculating the content of ruthenium (Ru) in the catalyst so that the content was stoichiometrically 3 wt%, but the final content of ruthenium (R) in the synthesized catalyst was confirmed to be 2.7 to 3.09 wt%. In addition, in Comparative Example 1-1 with no metal content described, the metal content was not able to be measured by the inductively coupled plasma (ICP) mass analysis.

The following Test Examples 2 to 5 were performed by the following steps (1) to (3).

First, 0.2 g of a catalyst was injected into a reactor, and the catalyst was pretreated at 500°C for 90 minutes under a hydrogen atmosphere (step 1).

Thereafter, the temperature was cooled to room temperature, and the injection of an external heat source into a furnace was stopped (step 2).

Finally, reaction evaluation was performed at 120 ml/min of ammonia, 30 ml of oxygen, total Gas Hour Space Velocity (GHSV) of 45,000 ml/$g_{cat}$-h (step 3).

Test Example 2: Reaction temperature, ammonia conversion rate, and hydrogen production amount depending on the type of lanthanide metal

Test Example 2-1: lanthanum (La), samarium (Sm), and ytterbium (Yb)

FIG. 3A is a graph showing reaction temperature ranges when a $Ru/Ce_{0.9}La_{0.1}O_{2-\delta}$ catalyst according to Example 1-4, a $Ru/Ce_{0.9}Sm_{0.1}O_{2-\delta}$ catalyst according to Example 3-1, and a $Ru/Ce_{0.9}Yb_{0.1}O_{2-\delta}$ catalyst according to

Example 3-2, FIG. 3B is a graph showing ammonia conversion rates and hydrogen production amounts using the Ru/Ce$_{0.9}$La$_{0.1}$O$_{2-\delta}$ catalyst according to Example 1-4, the Ru/Ce$_{0.9}$Sm$_{0.1}$O$_{2-\delta}$ catalyst according to Example 3-1, and the Ru/Ce$_{0.9}$Yb$_{0.1}$O$_{2-\delta}$ catalyst according to Example 3-2, and the following Table 5 shows reaction temperatures, ammonia conversion rates, and hydrogen production amounts using the catalysts according to Examples 1 to 5 and Comparative Examples 1 and 2 of the present disclosure. The catalysts were used after firing at 300°C.

Referring to FIGS. 3A and 3B and Table 5, when the Ru/Ce$_{0.9}$Sm$_{0.1}$O$_{2-\delta}$ catalyst containing samarium (Sm) according to Example 3-1 and the Ru/Ce$_{0.9}$Yb$_{0.1}$O$_{2-\delta}$ catalyst containing ytterbium (Yb) according to Example 3-2 were used, the ammonia decomposition reaction did not occur, but when the Ru/Ce$_{0.9}$La$_{0.1}$O$_{2-\delta}$ catalyst containing lanthanum (La) according to Example 1-4 was used, the reaction temperature was maintained at 500°C or higher, and also the ammonia conversion rate of about 67.3% and the hydrogen production amount of 1.7 kgH$_2$/kg$_{cat}$-h were shown, and thus, it was confirmed that the overall performance was very good.

Test Example 2-2: iron (Fe), copper (Cu), nickel (Ni), and cobalt (Co)

FIG. 4A is a graph showing reaction temperature ranges when a Ru/Ce$_{0.9}$Fe$_{0.1}$O$_{2-\delta}$ catalyst according to Example 4-2, a Ru/Ce$_{0.9}$Cu$_{0.1}$O$_{2-\delta}$ catalyst according to Example 4-3, a Ru/Ce$_{0.9}$Ni$_{0.1}$O$_{2-\delta}$ catalyst according to Example 4-4, and a Ru/Ce$_{0.9}$Co$_{0.1}$O$_{2-\delta}$ catalyst according to Example 4-5, FIG. 4B is a graph showing ammonia conversion rates and hydrogen production amounts using the Ru/Ce$_{0.9}$Fe$_{0.1}$O$_{2-\delta}$ catalyst according to Example 4-2, the Ru/Ce$_{0.9}$Cu$_{0.1}$O$_{2-\delta}$ catalyst according to Example 4-3, the Ru/Ce$_{0.9}$Ni$_{0.1}$O$_{2-\delta}$ catalyst according to Example 4-4, and the Ru/Ce$_{0.9}$Co$_{0.1}$O$_{2-\delta}$ catalyst according to Example 4-5, and the following Table 5 shows reaction temperatures, ammonia conversion rates, and hydrogen production amounts using the catalysts according to Examples 1 to 5 and Comparative Examples 1 and 2 of the present disclosure. The catalysts were used after firing at 300°C.

Referring to FIGS. 4A and 4B and Table 5, when the Ru/Ce$_{0.9}$Cu$_{0.1}$O$_{2-\delta}$ catalyst containing copper according to Example 4-3 and the Ru/Ce$_{0.9}$Ni$_{0.1}$O$_{2-\delta}$ catalyst containing nickel according to Example 4-4 were used, the ammonia decomposition reaction did not occur, but when the Ru/Ce$_{0.9}$Fe$_{0.1}$O$_{2-\delta}$ catalyst containing iron according to Example 4-2 was used, the reaction temperature was maintained at 500°C or higher, the ammonia conversion rate of about 49% and the hydrogen production amount of 0.78 kgH$_2$/kg$_{cat}$-h were shown, and when the Ru/Ce$_{0.9}$Co$_{0.1}$O$_{2-\delta}$ catalyst containing cobalt according to Example 4-5 was used, it was confirmed that the reaction temperature was maintained at about 440°C, and the ammonia conversion rate of about 52% and the hydrogen production amount of 0.93 kgH$_2$/kg$_{cat}$-h were shown.

Test Example 3: Reaction temperature, ammonia conversion rate, and hydrogen production amount depending on the type of transition metal

Test Example 3-1: yttrium (Y) and zirconium (Zr)

FIG. 2A is a graph showing reaction temperature ranges when a Ru/Ce$_{0.9}$Zr$_{0.1}$O$_{2-\delta}$ catalyst according to Example 2-3 and a Ru/Ce$_{0.9}$Y$_{0.1}$O$_{2-\delta}$ catalyst according to Example 4-1 are used, FIG. 2B is a graph showing ammonia conversion rates and hydrogen production amounts using the Ru/Ce$_{0.9}$Zr$_{0.1}$O$_{2-\delta}$ catalyst according to Example 2-3 and the Ru/Ce$_{0.9}$Y$_{0.1}$O$_{2-\delta}$ catalyst according to Example 4-1, and the following Table 5 shows reaction temperatures, ammonia conversion rates, and hydrogen production amounts using the catalysts according to Examples 1 to 5 and Comparative Examples 1 and 2 of the present disclosure. The catalysts were used after firing at 300°C.

Referring to FIGS. 2A and 2B and Table 5, when the Ru/Ce$_{0.9}$Zr$_{0.1}$O$_{2-\delta}$ catalyst according to Example 2-3 and the Ru/Ce$_{0.9}$Y$_{0.1}$O$_{2-\delta}$ catalyst according to Example 4-1 were used, the reaction temperatures had similar ranges while maintaining at about 460°C and about 440°C. However, when the Ru/Ce$_{0.9}$Zr$_{0.1}$O$_{2-\delta}$ catalyst according to Example 2-3 was used, the ammonia conversion rate was maintained at about 63%, and the hydrogen production amount was 1.43 kgH$_2$/kg$_{cat}$-h, and when the Ru/Ce$_{0.9}$Y$_{0.1}$O$_{2-\delta}$ catalyst according to Example 4-1 was used, the ammonia conversion rate was maintained at about 52%, and the hydrogen production amount was 0.93 kgH$_2$/kg$_{cat}$-h, and thus, it was confirmed that the catalyst according to Example 2-3 had better ammonia conversion rate and hydrogen production amount than the catalyst according to Example 4-1.

Test Example 4: Comparison of reaction temperature, ammonia conversion rate, and hydrogen production amount of catalysts depending on lanthanum (La) composition ratio

FIG. 6A is a graph showing reaction temperatures by an x value using lanthanum-containing Ru/Ce$_{1-x}$La$_x$O$_{2-\delta}$ catalysts according to Examples 1-1 to 1-5 and Comparative Example 1-1, FIG. 6B is a graph showing ammonia conversion rate data and hydrogen production amounts and by the x value using the lanthanum-containing Ru/Ce$_{1-x}$La$_x$O$_{2-\delta}$ catalysts according to Examples 1-1 to 1-5 and Comparative Example 1-1, and the following Table 5 shows reaction temperatures, ammonia conversion rates, and hydrogen production amounts using the catalysts according to Examples 1 to 5 and Comparative Examples 1 and 2 of the present disclosure. The catalysts were used after firing at 300°C.

Referring to FIGS. 6A and 6B and Table 5, when the catalysts containing lanthanum according to Examples 1-2 to 1-4 were used, the reaction temperature was maintained at 500°C or higher, but the catalyst containing lanthanum according to Example 1-5 did not cause a reaction, and the $Ru/Ce_{0.5}La_{0.5}O_{2-\delta}$ catalyst containing lanthanum according to Example 1-2 showed the highest ammonia conversion rate of 95% and the hydrogen production amount of 3.03 $kgH_2/kg_{cat}$-h. Therefore, it was confirmed that the catalyst containing lanthanum according to Example 1 had much better ammonia conversion rate and hydrogen production amount than the catalyst containing zirconium according to Example 2.

In addition, upon comparison of the catalysts of Example 1 (Ru 2 wt%) and Example 5 (Ru 3 wt%), it was confirmed that when the ruthenium content was increased from 2 wt% to 3 wt% and the injection gas flow rate was increased a lot, the ammonia conversion rate was improved and a higher hydrogen production amount was derived.

In addition, according to Example 1-1 and Comparative Example 1-1, it was confirmed that as the composition ratio of lanthanum (La) was increased, the catalytic activity was lowered.

Test Example 5: Comparison of reaction temperature, ammonia conversion rate, and hydrogen production amount of catalysts depending on zirconium (Zr) composition ratio

FIG. 5A is a graph showing reaction temperatures by an x value using zirconium-containing $Ru/Ce_{1-x}Zr_xO_{2-\delta}$ catalysts according to Examples 2-1 to 2-4, FIG. 5B is a graph showing ammonia conversion rate data and hydrogen production amounts by the x value using the zirconium-containing $Ru/Ce_{1-x}Zr_xO_{2-\delta}$ catalysts according to Examples 2-1 to 2-4, and the following Table 5 shows reaction temperatures, ammonia conversion rates, and hydrogen production amounts using the catalysts according to Examples 1 to 5 and Comparative Examples 1 and 2 of the present disclosure. The catalysts were used after firing at 300°C.

Referring to FIGS. 5A and 5B, and Table 5, the reaction temperature of the catalysts having the x value of 0.3 to 0.1, respectively according to Examples 2-2 and 2-3 were excellent at 500°C or higher and about 460°C, respectively, and the catalysts containing zirconium having the x value of 0.5 and 0.05, respectively according to Examples 2-1 and 2-4 showed a poor resultant value of lower than about 400°C. In addition, it was confirmed that the catalysts having the x value of 0.3 to 0.1, respectively according to Examples 2-2 and 2-3 had excellent ammonia conversion rates of 52.7% and 63%, respectively, and the catalysts containing zirconium having the x value of 0.5 and 0.05, respectively according to Examples 2-1 and 2-4 did not cause the ammonia decomposition reaction. In the following Table 5, reaction X means that no decomposition reaction occurred.

[Table 5]

| Classification | Chemical Formula | Reaction temperature (°C) | Ammonia conversion rate (%) | Hydrogen production amount |
|---|---|---|---|---|
| | | | | $(kgH_2/kg_{cat}$ -h) |
| Example 1-1 | $Ru/Ce_{0.3}La_{0.7}O_{2-\delta}$ | 500°C or higher | 79 | 2.52 |
| Example 1-2 | $Ru/Ce_{0.5}La_{0.4}O_{2-\delta}$ | 500°C or higher | 95 | 3.03 |
| Example 1-3 | $Ru/Ce_{0.7}La_{0.3}O_{2-\delta}$ | 500°C or higher | 80.3 | 2.62 |
| Example 1-4 | $Ru/Ce_{0.9}La_{0.1}O_{2-\delta}$ | 500°C or higher | 67.3 | 1.7 |
| Example 1-5 | $Ru/Ce_{0.95}La_{0.05}O_{2-\delta}$ | - | Reaction X | Reaction X |
| Comparative Example 1-1 | $Ru/La_2O_3$ | - | Reaction X | Reaction X |
| Example 2-1 | $Ru/Ce_{0.5}Zr_{0.5}O_{2-\delta}$ | lower than 400°C | Reaction X | Reaction X |
| Example 2-2 | $Ru/Ce_{0.72}Zr_{0.3}O_{2-\delta}$ | 500°C or higher | 52.7 | 0.93 |
| Example 2-3 | $Ru/Ce_{0.9}Zr_{0.1}O_{2-\delta}$ | 460°C | 63 | 1.43 |
| Example 2-4 | $RU/Ce_{0.95}Zr_{0.05}O_{2-\delta}$ | lower than 400°C | Reaction X | Reaction X |
| Example 3-1 | $Ru/Ce_{0.9}Sm_{0.1}O_{2-\delta}$ | - | Reaction X | Reaction X |
| Example 3-2 | $Ru/Ce_{0.9}Yb_{0.1}O_{2-\delta}$ | - | Reaction X | Reaction X |
| Example 4-1 | $Ru/Ce_{0.9}Y_{0.1}O_{2-\delta}$ | 440°C | 52 | 0.93 |

(continued)

| Classification | Chemical Formula | Reaction temperature (°C) | Ammonia conversion rate (%) | Hydrogen production amount |
|---|---|---|---|---|
| Example 4-2 | $Ru/Ce_{0.9}Fe_{0.1}O_{2-\delta}$ | 500°C or higher | 49 | 0.78 |
| Example 4-3 | $Ru/Ce_{0.9}Cu_{0.1}O_{2-\delta}$ | - | Reaction X | Reaction X |
| Example 4-4 | $Ru/Ce_{0.9}Ni_{0.1}O_{2-\delta}$ | - | Reaction X | Reaction X |
| Example 4-5 | $Ru/Ce_{0.9}Co_{0.1}O_{2-\delta}$ | 400°C or higher | 53 | 0.99 |
| Example 5-1 | $Ru/Ce_{0.3}La_{0.7}O_{2-\delta}$ | 500°C or higher | 80 | 2.57 |
| Example 5-2 | $Ru/Ce_{0.5}La_{0.5}O_{2-\delta}$ | 500°C or higher | 100 | 3.214 |
| Example 5-3 | $Ru/Ce_{0.7}La_{0.3}O_{2-\delta}$ | 400°C or higher | 85 | 2.73 |
| Example 5-4 | $Ru/Ce_{0.9}La_{0.1}O_{2-\delta}$ | 300°C or higher | <30 | <1 |
| Comparative Example 2-1 | $Ru/La_2O_3$ | 400°C or higher | 90 | 2.9 |
| Comparative Example 2-2 | $Ru/CeO_2$ | 300°C or higher | <30 | <1 |

In Table 5, in Examples 1-5, 3-1, 3-2, 4-3, 4-4, and Comparative Example 1-1 with no reaction temperature described, each catalyst was not activated, and the reaction temperature was not able to be measured.

Test Example 6: Detailed gas concentration analysis according to lanthanum (La) composition ratio

FIG. 7A is a graph showing an ammonia conversion rate and a chemical formula coefficient data by analyzing a detailed gas concentration of the $Ru/Ce_{0.5}La_{0.5}O_{2-\delta}$ catalyst according to Example 1-2, and FIG. 7B is a graph showing the ammonia conversion rate and the chemical formula coefficient data by analyzing a detailed gas concentration of the $Ru/Ce_{0.7}La_{0.3}O_{2-\delta}$ catalyst according to Example 1-3. In addition, Table 1 shows data of calculation of gas coefficient changes depending on the ammonia partial oxidation reaction, Table 2 shows the calculation formula of gas production and conversion indicators in the ammonia partial oxidation reaction, and the graphs of FIGS. 7A and 7B show the results of catalyst evaluation by finding coefficient (a, b, c, d) values corresponding to each gas using Equation 1 and applying them to Equation 2 to analyze detailed gas concentration.

Referring to FIGS. 7A and 7B, it was confirmed that the ammonia conversion rate of the $Ru/Ce_{0.5}La_{0.5}O_{2-\delta}$ catalyst according to Example 1-2 was the highest at 95%, and maintained the reaction for 2 hours which is the longest retention time based on a single reaction.

Test Example 7: Comparison of heating temperatures depending on protocol (AOR: $NH_3/O_2$ ratio)

FIG. 8 is a graph showing an evaluation protocol (AOR: $NH_3/O_2$ ratio) of $Ru(3 wt\%)/Ce_{1-x}La_xO_{2-\delta}$ catalysts of Examples 5-1 to 5-4 and Comparative Examples 2-1 and 2-2, and the reaction was performed for 2 hours and 30 minutes for each condition. The AOR according to FIG. 8 was divided into sections (a) to (e), and specifically, section (a) had AOR of 4 to 5 with the flow rates of 200 to 300 ml/min of $NH_3$, 40 to 75 ml/min of $O_2$, and 160 to 300 ml/min of $N_2$, section (b) had AOR of 5 to 6 with the flow rates of 200 to 300 ml/min of $NH_3$, 32 to 60 ml/min of $O_2$, and 128 to 240 ml/min of $N_2$, section (c) had AOR of 5 to 6 with the flow rates of 300 to 400 ml/min of $NH_3$, 50 to 80 ml/min of $O_2$, and 200 to 320 ml/min of $N_2$, section (d) had AOR of 6 to 7 with the flow rates of 200 to 300 ml/min of $NH_3$, 28 to 50 ml/min of $O_2$, and 112 to 200 ml/min of $N_2$, and section (e) had AOR of 6 to 7 with the flow rates of 300 to 400 ml/min of $NH_3$, 42 to 67 ml/min of $O_2$, and 168 to 268 ml/min of $N_2$. FIG. 9 is a graph showing temperature data by section of the $Ru(3 wt\%)/Ce_{1-x}La_xO_{2-\delta}$ catalysts according to Examples 5-1 to 5-4 and Comparative Examples 2-1 and 2-2.

Referring to FIGS. 8 and 9, it was found that the lower the oxygen ratio in the protocol, the lower the heating temperature, and the higher the protocol injection gas amount, the higher the heating temperature.

Test Example 8: Comparison of ammonia conversion rate and hydrogen production amount of $Ru(3 wt\%)/Ce_{1-x}La_xO_{2-\delta}$ catalyst depending on protocol (AOR: $NH_3/O_2$ ratio) and lanthanum (La) composition ratio

The following Test Examples 8-1 to 8-5 were performed by the following steps (1') to (3').

First, 0.2 g of a catalyst was injected into a reaction system (step 1').

Thereafter, in order to replace existing pure oxygen in the reaction system, ammonia, oxygen, and nitrogen were injected in this order, and at this time, the injection was performed so that a mole ratio between oxygen and nitrogen was 1:4 (step 2').

Finally, evaluation was performed by adjusting the flow rates of $NH_3$ and $O_2$ so that the ratio between $NH_3$ and $O_2$ was 5 or 6 (step 3').

Test Example 8-1: $4 \leq AOR < 5$, $200 \leq NH_3 < 300$(ml/min), $40 \leq O_2 < 75$(ml/min), $160 \leq N_2 < 300$(ml/min)

FIG. 9 is a graph showing temperature data by section of the Ru(3 wt%)/$Ce_{1-x}La_xO_{2-\delta}$ catalysts according to Examples 5-1 to 5-4 and Comparative Examples 2-1 and 2-2, FIG. 10A is a graph showing ammonia conversion rate data over time when an AOR ($NH_3/O_2$ ratio) of the Ru(3 wt%)/$Ce_{1-x}La_xO_{2-\delta}$ catalysts according to Examples 5-1 to 5-4 and Comparative Examples 2-1 and 2-2 was 4 to 5, FIG. 10B is a graph showing ammonia conversion rate data depending on a lanthanum (La) content when the AOR($NH_3/O_2$ ratio) of the Ru(3 wt%)/$Ce_{1-x}La_xO_{2-\delta}$ catalysts according to Examples 5-1 to 5-4 and Comparative Examples 2-1 and 2-2 was 4 to 5, and the ammonia conversion rates and the hydrogen production amounts were measured for 150 minutes.

Referring to part (a) of FIG. 9 and FIG. 10A, it was found that the catalysts using the supports based on a cerium oxide according to Comparative Example 2-1 and Example 5-4 showed deterioration occurrence after exposing to a high temperature and a very low ammonia conversion rate. However, it was confirmed that the catalysts according to Examples 5-1, 5-2, 5-3, and Comparative Example 2-1 containing a lanthanum metal showed stability at a high temperature as the lanthanum content was increased, and the ammonia conversion rate of the catalyst according to Example 5-2 was the highest.

In addition, referring to FIG. 10B, it was found that the same tendency as the results of FIG. 10A was shown.

Test Example 8-2: $5 \leq AOR < 6$, $200 \leq NH_3 < 300$(ml/min), $32 \leq O_2 < 60$(ml/min), $128 \leq N_2 < 240$(ml/min)

FIG. 9 is a graph showing temperature data by section of the Ru(3 wt%)/Ce1-xLaxO2-$\delta$ catalysts according to Examples 5-1 to 5-4 and Comparative Examples 2-1 and 2-2, FIG. 11A is a graph showing ammonia conversion rate data over time when an AOR ($NH_3/O_2$ ratio) of the Ru(3 wt%)/$Ce_{1-x}La_xO_{2-\delta}$ catalysts according to Examples 5-1 to 5-4 and Comparative Examples 2-1 and 2-2 was 5 to 6, FIG. 11B is a graph showing ammonia conversion rate data depending on a lanthanum (La) content when the AOR($NH_3/O_2$ ratio) of the Ru(3 wt%)/$Ce_{1-x}La_xO_{2-\delta}$ catalysts according to Examples 5-1 to 5-4 and Comparative Examples 2-1 and 2-2 was 5 to 6, and the ammonia conversion rates and the hydrogen production amounts were measured for 150 minutes.

Referring to part (a) of FIG. 9 and FIG. 11A, it was confirmed that the overall reaction temperature was lowered due to a decrease in injection oxygen fraction as compared with Test Example 8-1. However, it was confirmed that in the case of the catalyst containing a large amount of lanthanum, a high temperature of 500°C or higher was stably maintained.

Next, referring to FIG. 11B, it was found that the same tendency as the results of the ammonia conversion rate of FIG. 11A was shown. Besides, it was confirmed that the hydrogen production amount was increased due to the decrease in oxygen injection.

Test Example 8-3: $5 \leq AOR < 6$, $300 \leq NH_3 < 400$(ml/min), $50 \leq O_2 < 80$(ml/min), $200 \leq N_2 < 320$(ml/min)

FIG. 12A is a graph showing ammonia conversion rate data over time when the AOR ($NH_3/O_2$ ratio) of the Ru(3 wt%)/$Ce_{1-x}La_xO_{2-\delta}$ catalysts according to Examples 5-1 to 5-4 and Comparative Examples 2-1 and 2-2 was 5 to 6, FIG. 12B is a graph showing ammonia conversion rate data depending on a lanthanum (La) content when the AOR ($NH_3/O_2$ ratio) of the Ru(3 wt%)/$Ce_{1-x}La_xO_{2-\delta}$ catalysts according to Examples 5-1 to 5-4 and Comparative Examples 2-1 and 2-2 was 5 to 6, and the ammonia conversion rates and the hydrogen production amounts were measured for 150 minutes.

Referring to FIG. 12A, since the total amounts of the injected materials and reactants were increased as compared with Test Example 8-2, it was found that the reaction temperature in the present experimental section was raised. Due to the temperature rise effect as such, it was confirmed that an additional ammonia decomposition rate was increased.

In addition, referring to FIG. 12B, as the total gas injection amount was increased, the hydrogen production amount was increased, which is the same as the resulting tendency in the ammonia conversion rate.

Test Example 8-4: $6 \leq AOR < 7$, $200 \leq NH_3 < 300$(ml/min), $28 \leq O_2 < 50$(ml/min), $112 \leq N_2 < 2000$(ml/min)

FIG. 13A is a graph showing ammonia conversion rate data over time when the AOR ($NH_3/O_2$ ratio) of the Ru(3 wt%)/$Ce_{1-x}La_xO_{2-\delta}$ catalysts according to Examples 5-1 to 5-4 and Comparative Examples 2-1 and 2-2 was 6 to 7, FIG. 13B is a graph showing ammonia conversion rate data depending on a lanthanum (La) content when the AOR ($NH_3/O_2$ ratio) of the Ru(3 wt%)/$Ce_{1-x}La_xO_{2-\delta}$ catalysts according to Examples 5-1 to 5-4 and Comparative Examples 2-1 and 2-2 was 6 to 7, and the ammonia conversion rates and the hydrogen production amounts were measured for 150 minutes.

Referring to FIG. 13A, it was confirmed that the overall reaction temperature was lowered due to a decrease in the injected oxygen fraction. Besides, it was confirmed that as the reaction temperature was lowered, the ammonia decomposition rate was lowered.

In addition, referring to FIG. 13B, it was found that the hydrogen production amount was also lowered as compared with Test Example 8-3, due to the decrease in the ammonia conversion rate.

Test Example 8-5: $6 \leq AOR < 7$, $300 \leq NH_3 < 400$(ml/min), $42 \leq O_2 < 67$(ml/min), $168 \leq N_2 < 268$(ml/min)

FIG. 14A is a graph showing ammonia conversion rate data over time when an AOR ($NH_3/O_2$ ratio) of the Ru(3 wt%)/$Ce_{1-x}La_xO_{2-\delta}$ catalysts according to Examples 5-1 to 5-4 and Comparative Examples 2-1 and 2-2 was 6 to 7, FIG. 14B is a graph showing ammonia conversion rate data depending on a lanthanum (La) content when the AOR ($NH_3/O_2$ ratio) of the Ru(3 wt%)/$Ce_{1-x}La_xO_{2-\delta}$ catalysts according to Examples 5-1 to 5-4 and Comparative Examples 2-1 and 2-2 was 6 to 7, and the ammonia conversion rates and the hydrogen production amounts were measured for 150 minutes.

Referring to FIG. 14A, since the total amounts of the injected materials and reactants were increased as compared with Test Example 8-4, it was found that the reaction temperature in the present experimental section was raised. Due to the temperature rise effect as such, it was confirmed that an additional ammonia decomposition rate was increased.

In addition, referring to FIG. 14B, as the total gas injection amount was increased, the hydrogen production amount was increased, which is the same as the resulting tendency in the ammonia conversion rate.

Test Example 9: Component analysis of catalyst depending on lanthanum (La) composition ratio

The following Table 6 shows the support specific surface area data depending on the contents of ruthenium (Ru), cesium (Ce), and lanthanum (La) and the composition ratio of lanthanum (La) of the catalysts according to Examples 5-1 to 5-4 and Comparative Examples 2-1 and 2-2, and in the following Table 6, the contents of ruthenium (Ru), cesium (Ce), and lanthanum (La) were analyzed using Inductively coupled plasma - optical emission spectrometry (ICP-OES), and the specific surface area was analyzed using a specific surface area analyzer (Brunauer Emmett Teller, BET).

Referring to the following Table 6, it was found that when Example 5-1 to which an excessive amount of lanthanum was added and Comparative Example 2-1 were confirmed, the specific surface area of the catalyst was much decreased.

[Table 6]

| Classification | Catalyst name | Ru content (wt%) | Specific surface area ($m^2/g$) | Ce content (mol%) | La content (mol%) |
|---|---|---|---|---|---|
| Example 5-1 | Ru/$Ce_{0.3}La_{0.7}O_{2-\delta}$ | $2.7 \pm 0.018$ | 49.77 | 30 | 70 |
| Example 5-2 | Ru/$Ce_{0.5}La_{0.5}O_{2-\delta}$ | $3.00 \pm 0.180$ | 71.24 | 50 | 50 |
| Example 5-3 | Ru/$Ce_{0.7}La_{0.3}O_{2-\delta}$ | $2.96 \pm 0.154$ | 71.67 | 68 | 32 |
| Example 5-4 | Ru/$Ce_{0.9}La_{0.1}O_{2-\delta}$ | $2.73 \pm 0.018$ | 72.42 | 89 | 11 |
| Comparative Example 2-1 | Ru/$La_2O_3$ | $3.09 \pm 0.053$ | 36.024 | - | 100 |
| Comparative Example 2-2 | Ru/$CeO_2$ | $2.99 \pm 0.018$ | 63.01 | 100 | - |

Hereinabove, though preferred exemplary embodiments of the present disclosure have been described, those skilled in the art will make various modifications and variations of the present disclosure by addition, change, deletion, or supplement of constituent elements, within the scope without departing from the spirit of the present disclosure as set forth in the claims, and this will be also included within the right scope of the present disclosure. For example, each component described as a singular form may be practiced in a dispersed form, and also, each component described as being dispersed may be practiced in a connected form. It should be interpreted that the scope of the present disclosure is defined by the following claims rather than the above-mentioned detailed description and all modifications or alterations deduced from the meaning, the scope, and equivalences of the claims are included in the scope of the present disclosure.

**Claims**

1. A catalyst comprising:

   a support including a compound represented by the following Chemical Formula 1; and ruthenium (Ru) loaded on the support:

   [Chemical Formula 1] $Ce_{1-x}M_xO_{2-\delta}$

   wherein
   x satisfies 0<x<1,
   M is a lanthanide metal or a transition metal, and
   $\delta$ satisfies $0<\delta\leq0.5$.

2. The catalyst of claim 1, wherein the lanthanide metal includes one or more selected from the group consisting of lanthanum (La), samarium (Sm), ytterbium (Yb), gadolinium (Gd), and lutetium (Lu).

3. The catalyst of claim 1, wherein the lanthanide metal includes lanthanum (La).

4. The catalyst of claim 1,

   wherein the lanthanide metal includes lanthanum (La), and
   x satisfies $0.05\leq x\leq0.8$.

5. The catalyst of claim 1, wherein the transition metal includes one or more selected from the group consisting of zirconium (Zr), yttrium (Y), iron (Fe), copper (Cu), nickel (Ni), cobalt (Co), and osmium (Os).

6. The catalyst of claim 1, wherein the transition metal includes zirconium (Zr).

7. The catalyst of claim 1,

   wherein the transition metal includes zirconium (Zr), and
   x satisfies $0.05\leq x\leq0.5$.

8. The catalyst of claim 1, wherein the catalyst includes 1 to 5 wt% of the ruthenium.

9. The catalyst of claim 8, wherein the catalyst includes 1.5 to 3.5 wt% of the ruthenium.

10. The catalyst of claim 1, wherein the catalyst is for extracting hydrogen by decomposing ammonia.

11. A manufacturing method for a catalyst, the method comprising:

    (a) preparing a precursor solution including one or more selected from the group consisting of lanthanide metal precursors and transition metal precursors, a cerium precursor, and water;
    (b) coprecipitating the precursor of the precursor solution to synthesize a coprecipitate including one or more selected from the group consisting of lanthanide metals and transition metals and cerium;
    (c) heat treating the coprecipitate to prepare a support; and
    (d) stirring a support solution including the support, the ruthenium precursor, and water to manufacture a catalyst including a ruthenium-loaded support.

12. The manufacturing method for a catalyst of claim 11, wherein the catalyst includes a support including a compound represented by the following Chemical Formula 1 and ruthenium (Ru) loaded on the support:

    [Chemical Formula 1] $Ce_{1-x}M_xO_{2-\delta}$

    wherein

    x satisfies 0<x<1,

M is a lanthanide metal or a transition metal, and

$\delta$ satisfies $0<\delta\leq0.5$.

13. A hydrogen extraction method comprising: (1) extracting hydrogen by partially oxidizing ammonia in the presence of the catalyst of claim 11 and oxygen.

14. The hydrogen extraction method of claim 13, wherein the partial oxidation reaction includes an ammonia decomposition reaction and an ammonia oxidation reaction.

15. The hydrogen extraction method of claim 14, wherein the partial oxidation reaction is performed by a reaction of the following Reaction Formula 1:

[Reaction Formula 1] $NH_3(g) + xO_2(g) \rightarrow 0.5N_2(g) + 2xH_2O(g) + (1.5-2x)H_2(g)$ H = 46-484x kJ mol$^{-1}$

wherein
x satisfies $0<x<0.75$.

16. The hydrogen extraction method of claim 15, wherein the reaction of Reaction Formula 1 is performed using heat of reaction by an exothermic reaction of one or more selected from the group consisting of the following Reaction Formula 2 and Reaction Formula 3 and some external heat sources:

[Reaction Formula 2] $NH_3(g) \rightarrow 0.5N_2(g) + 1.5H_2(g)$ $\triangle H = 45.9$ kJ mol$^{-1}$

[Reaction Formula 3] $NH_3(g) + 0.75O_2(g) \rightarrow 0.5N_2(g) + 1.5H_2O(g)$ $\triangle H = -317$ kJ mol$^{-1}$.

17. The hydrogen extraction method of claim 13, wherein (1) is performed without supplying heat from outside or using some external heat sources.

18. The hydrogen extraction method of claim 13, wherein in (1), a Gas Hour Space Velocity (GHSV, L/($g_{cat}$-h)) ratio between ammonia and oxygen is 2:1 to 6:1.

19. The hydrogen extraction method of claim 13, wherein (1) is performed at 450 to 700°C.

[FIG. 1]

```
                    ┌──────────┐
                    │  Start   │
                    └────┬─────┘
                         │
                         ▼
   ┌─────────────────────────────────────────────┐
   │ Prepare precursor solution including one or   │
   │  more selected from group consisting of       │        Step a
   │  lanthanide metal precursors and transition   │
   │ metal precursors, cerium precursor, and water │
   └─────────────────────┬─────────────────────────┘
                         │
                         ▼
   ┌─────────────────────────────────────────────┐
   │ coprecipitate precursor of precursor solution │
   │  to synthesize coprecipitate including one or │
   │   more selected from group consisting of      │        Step b
   │  lanthanide metals and transition metals and  │
   │                  cerium                       │
   └─────────────────────┬─────────────────────────┘
                         │
                         ▼
   ┌─────────────────────────────────────────────┐
   │  Heat treat coprecipitate to prepare support  │        Step c
   └─────────────────────┬─────────────────────────┘
                         │
                         ▼
   ┌─────────────────────────────────────────────┐
   │ Stirring support solution including support,  │
   │   ruthenium precursor, and water to           │        Step d
   │      manufacture catalyst including           │
   │       ruthenium−loaded support                │
   └─────────────────────┬─────────────────────────┘
                         │
                         ▼
                    ┌──────────┐
                    │   End    │
                    └──────────┘
```

[FIG. 2a]

[FIG. 2b]

[FIG. 3a]

[FIG. 3b]

[FIG. 4a]

[FIG. 4b]

[FIG. 5a]

[FIG. 5b]

[FIG. 6a]

[FIG. 6b]

[FIG. 7a]

[FIG. 7b]

[FIG. 8]

[FIG. 9]

[FIG. 10a]

[FIG. 10b]

[FIG. 11a]

[FIG. 11b]

[FIG. 12a]

[FIG. 12b]

[FIG. 13a]

[FIG. 13b]

[FIG. 14a]

[FIG. 14b]

## INTERNATIONAL SEARCH REPORT

| International application No. |
| --- |
| **PCT/KR2024/008158** |

| A. | CLASSIFICATION OF SUBJECT MATTER |
| --- | --- |

**B01J 23/89**(2006.01)i; **B01J 23/63**(2006.01)i; **B01J 37/02**(2006.01)i; **B01J 37/03**(2006.01)i; **B01J 37/08**(2006.01)i; **C01B 3/04**(2006.01)i

According to International Patent Classification (IPC) or to both national classification and IPC

| B. | FIELDS SEARCHED |
| --- | --- |

Minimum documentation searched (classification system followed by classification symbols)

B01J 23/89(2006.01); B01J 23/10(2006.01); B01J 23/40(2006.01); B01J 23/42(2006.01); B01J 23/46(2006.01); B01J 23/63(2006.01); B01J 23/74(2006.01); B01J 29/74(2006.01); C01B 3/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 암모니아(ammonia), 수소(hydrogen), 촉매(catalyst), 산화(oxidation), 산소(oxygen), 세륨(cerium), 지르코늄(zirconium)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2021-0147910 A (KOREA RESEARCH INSTITUTE OF CHEMICAL TECHNOLOGY) 07 December 2021 (2021-12-07) See claims 1-8; table 1; and example 1. | 1-12 |
| Y | | 13-19 |
| Y | KR 10-2011-0129394 A (NIPPON SHOKUBAI CO., LTD.) 01 December 2011 (2011-12-01) See claims 10-17; and paragraphs [0026]-[0201]. | 13-19 |
| A | JP 2010-269239 A (HITACHI ZOSEN CORP.) 02 December 2010 (2010-12-02) See claims 1-8. | 1-19 |
| A | JP 2010-241647 A (TOYOTA MOTOR CORP. et al.) 28 October 2010 (2010-10-28) See claims 1-5. | 1-19 |

☑ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 September 2024** | **13 September 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/008158**

| C. | DOCUMENTS CONSIDERED TO BE RELEVANT | |
|---|---|---|
| Category* | Citation of document, with indication, where appropriate, of the relevant passages | Relevant to claim No. |
| A | JP 2019-177381 A (OITA UNIV.) 17 October 2019 (2019-10-17)<br>  See claims 1-5. | 1-19 |

Form PCT/ISA/210 (second sheet) (July 2022)

## INTERNATIONAL SEARCH REPORT
### Information on patent family members

International application No.

**PCT/KR2024/008158**

| Patent document cited in search report | | | Publication date (day/month/year) | Patent family member(s) | | | Publication date (day/month/year) |
|---|---|---|---|---|---|---|---|
| KR | 10-2021-0147910 | A | 07 December 2021 | CN | 115916395 | A | 04 April 2023 |
| | | | | EP | 4159311 | A1 | 05 April 2023 |
| | | | | EP | 4159311 | A4 | 10 July 2024 |
| | | | | JP | 2023-527419 | A | 28 June 2023 |
| | | | | KR | 10-2570390 | B1 | 25 August 2023 |
| | | | | US | 2023-0234841 | A1 | 27 July 2023 |
| | | | | WO | 2021-241841 | A1 | 02 December 2021 |
| KR | 10-2011-0129394 | A | 01 December 2011 | CN | 102348504 | A | 08 February 2012 |
| | | | | CN | 102348504 | B | 18 March 2015 |
| | | | | CN | 103877983 | A | 25 June 2014 |
| | | | | EP | 2409761 | A1 | 25 January 2012 |
| | | | | EP | 2409761 | B1 | 02 October 2019 |
| | | | | JP | 2010-240644 | A | 28 October 2010 |
| | | | | JP | 2010-240645 | A | 28 October 2010 |
| | | | | JP | 2010-240646 | A | 28 October 2010 |
| | | | | JP | 2010-241675 | A | 28 October 2010 |
| | | | | JP | 2014-159031 | A | 04 September 2014 |
| | | | | JP | 5483705 | B2 | 07 May 2014 |
| | | | | JP | 5624343 | B2 | 12 November 2014 |
| | | | | JP | 5763890 | B2 | 12 August 2015 |
| | | | | JP | 5778309 | B2 | 16 September 2015 |
| | | | | US | 10857523 | B2 | 08 December 2020 |
| | | | | US | 2012-0015802 | A1 | 19 January 2012 |
| | | | | US | 2014-0234204 | A1 | 21 August 2014 |
| | | | | US | 2019-0210009 | A1 | 11 July 2019 |
| | | | | US | 8962518 | B2 | 24 February 2015 |
| | | | | WO | 2010-107065 | A1 | 23 September 2010 |
| JP | 2010-269239 | A | 02 December 2010 | JP | 5352343 | B2 | 27 November 2013 |
| JP | 2010-241647 | A | 28 October 2010 | CN | 102356043 | A | 15 February 2012 |
| | | | | CN | 102356043 | B | 18 December 2013 |
| | | | | EP | 2417055 | A2 | 15 February 2012 |
| | | | | EP | 2417055 | B1 | 22 April 2015 |
| | | | | JP | 5352323 | B2 | 27 November 2013 |
| | | | | US | 2012-0040261 | A1 | 16 February 2012 |
| | | | | US | 8932773 | B2 | 13 January 2015 |
| | | | | WO | 2010-116874 | A2 | 14 October 2010 |
| | | | | WO | 2010-116874 | A3 | 07 April 2011 |
| JP | 2019-177381 | A | 17 October 2019 | JP | 6795804 | B2 | 02 December 2020 |

Form PCT/ISA/210 (patent family annex) (July 2022)